(19) **Europäisches Patentamt**
**European Patent Office**
**Office européen des brevets**

(11) **EP 2 382 609 B1**

(12) **EUROPÄISCHE PATENTSCHRIFT**

(45) Veröffentlichungstag und Bekanntmachung des Hinweises auf die Patenterteilung:
**13.02.2013 Patentblatt 2013/07**

(21) Anmeldenummer: **09806165.8**

(22) Anmeldetag: **15.12.2009**

(51) Int Cl.:
**G08G 1/16** (2006.01)

(86) Internationale Anmeldenummer:
**PCT/DE2009/001750**

(87) Internationale Veröffentlichungsnummer:
**WO 2010/072195 (01.07.2010 Gazette 2010/26)**

(54) **Verfahren zur Ermittlung einer Kollisionswahrscheinlichkeit eines Fahrzeugs mit einem Lebewesen.**

Method for determining the probability of a collision of a vehicle with a living being.

Dispositif permettant de déterminer une probabilité de collision d'un véhicule avec un être vivant.

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.12.2008 DE 102008062916**

(43) Veröffentlichungstag der Anmeldung:
**02.11.2011 Patentblatt 2011/44**

(73) Patentinhaber: **Continental Safety Engineering International GmbH**
**63755 Alzenau (DE)**

(72) Erfinder:
• ZECHA, Stephan
  63768 Hösbach (DE)
• BAUER, Woldemar
  63739 Aschaffenburg (DE)

(56) Entgegenhaltungen:
**DE-A1- 10 257 842     US-A1- 2004 263 330**
**US-B1- 6 188 957**

EP 2 382 609 B1

**Beschreibung**

Die Erfindung betrifft ein Verfahren zur Ermittlung einer Kollisionswahrscheinlichkeit eines Fahrzeugs mit einem Lebewesen, insbesondere einem Fußgänger gemäß Oberbegriff des Patentanspruchs 1, insbesondere für die Anwendung in einem Personenschutzsystem in einem Fahrzeug oder einem Fahrsimulator.

Bei einem solchen Verfahren wird mit zumindest einer Sensorik Umgebungsinformationen erfasst. Die Umgebungsinformationen werden mit einer Recheneinheit ausgewertet, um ein Lebewesen zu identifizieren. Weiter werden für das Lebewesen eine Bewegungstrajektorie und ein Bewegungszustand auf der Basis eines Verhaltensmodells des Lebewesens zu einem gegebenen Zeitpunkt ermittelt, um die Wahrscheinlichkeit eines Zusammenstoßes, beispielsweise eines Fußgängers mit dem Fahrzeug abzuschätzen.

Ein hohes Kollisionsrisiko, also ein Zusammenstoß mit hoher Wahrscheinlichkeit, kann zu unterschiedlichen, den Schutz des Fußgängers bewirkenden Aktionen führen. So kann beispielsweise eine Warnung an den Fahrer und/ oder den Fußgänger gerichtet werden, eine Fußgängerschutzvorrichtung ausgelöst werden oder auch autonome Fahrzeugaktionen, wie beispielsweise eine Notbremsung oder ein Ausweichmanöver durchgeführt werden.

Um das Risiko einer Kollision im Straßenverkehr zwischen Kraftfahrzeugen und Fußgängern, Radfahrern oder Tieren (allgemein Lebewesen) zu erkennen und bei entsprechend hoher Kollisionswahrscheinlichkeit entsprechende Schutzmaßnahmen einzuleiten, ist eine Erfassung und Beurteilung jeweiliger Verkehrssituationen notwendig. Anhand dieser Informationen kann einerseits ein Bewegungszustand des Fahrzeugs und andererseits ein Bewegungszustand des jeweils beobachteten Lebewesens ermittelt werden. Anhand einer Extrapolation wird das weitere Bewegungsverhalten der beiden Verkehrsteilnehmer ermittelt.

Zur Erkennung von Kollisionssituationen und zur richtigen Unterscheidung zwischen kritischen und unkritischen Situationen, müssen hochwertige Methoden zur Berechnung des vorliegenden Risikos verwendet werden.

So ist es bekannt, eine Risikobewertung entweder ausschließlich auf der Basis der statistischen Betrachtung der Fehlervarianzen der ermittelten Positionen der Fußgänger durchzuführen oder alternativ unter der Annahme einer eindimensionalen Querverteilung der Aufenthaltsbereiche von Fahrzeug und Fußgänger mittels dem mathematischen Vorgang der Faltung der beiden Querverteilungen zu berechnen.

Für die Zuverlässigkeit der Abschätzung des Kollisionsrisikos ist auch die Prognosefähigkeit des Bewegungsverhaltens des Lebewesens von entscheidender Bedeutung. Je genauer die Prognosefähigkeit ausgebildet ist, desto eher ist eine selektive Auslösung von an die Situation angepassten Schutzsystemen möglich. Hierdurch können insbesondere auch Fehlauslösungen vermieden werden, die nichts zum Schutz der Verkehrsteilnehmer beitragen und lediglich die Instandhaltungskosten des Fahrzeugs erhöhen oder im Fall von Falschwarnungen den Fahrer irritieren oder Folgeschäden nach sich ziehen.

Die DE 103 25 762 A1 beschreibt ein Verfahren zum Betrieb eines Bildverarbeitungssystems für ein Fahrzeug. Bei diesem werden mit wenigstens einem Bildsensor Umgebungsinformationen erfasst und mit einer Recheneinheit dahingehend ausgewertet, um das Vorhandensein von Verkehrsteilnehmern zu erkennen. Dabei wird die Blickrichtung eines oder mehrerer erkannter Verkehrsteilnehmer erfasst. Hierdurch wird die Abschätzung eines Kollisionsrisikos vorgenommen, indem die Aufmerksamkeit der Verkehrsteilnehmer berücksichtigt wird. Die Erfassung der Blickrichtung eines oder mehrerer Verkehrsteilnehmer wird als Maß für die Aufmerksamkeit herangezogen. Hierbei liegt die Überlegung zu Grunde, dass die Blickrichtung eines Verkehrsteilnehmers anzeigt, ob dieser aufmerksam ist und z.B. ein herannahendes Fahrzeug durch diesen Verkehrsteilnehmer wahrgenommen wird. Das Kollisionsrisiko wird als höher eingestuft, wenn der Verkehrsteilnehmer in eine dem Bildsensor entgegengesetzte Richtung blickt als wenn dieser dagegen direkt in den Bildsensor blickt. Es ist ferner vorgesehen, in Abhängigkeit der erfassten und ausgewerteten Blickrichtung erkannten Verkehrsteilnehmer ein Wahrscheinlichkeitsmaß zur Abschätzung des Kollisionsrisikos zu bilden. Dieses wird aufgrund von Bewegungsinformationen des Fahrzeugs und/oder des oder der erkannten Verkehrsteilnehmer gebildet.

Bei der Bewegungsinformation handelt es sich um Geschwindigkeit, Richtung sowie Trajektorie, mit der sich ein Fahrzeug und/oder ein erkannter Verkehrsteilnehmer bewegen.

Ferner ist aus der EP 1 331 621 B1 ein Verfahren zum Überwachen der Umgebung von Kraftfahrzeugen hinsichtlich des Gefahrencharakters eines möglichen Hindernisses bekannt, bei dem neben der Unsicherheit von Positionsmessungen auch die Unsicherheiten hinsichtlich des zukünftigen Verhaltens des Objekts berücksichtigt werden, insbesondere auch besondere und plötzliche Ereignisse, welche dazu geeignet sind, das zukünftige Verhalten des Objekts zu verändern. Um die Wahrscheinlichkeit einer Kollision zu bestimmen, wird zunächst zu aufeinanderfolgenden Zeitpunkten der von dem Objekt maximal erreichbare Bereich bestimmt. Hierdurch ergibt sich ein Trajektorienschlauch, der sich in Richtung zukünftiger Zeitpunkte immer mehr aufweitet. Die Wahrscheinlichkeit einer Kollision zu einem bestimmten Zeitpunkt ergibt sich dann aus dem Verhältnis der Schnittfläche der möglichen Positionen des Fahrzeugs und des Objekts zu diesem Zeitpunkt und der Fläche der möglichen Positionen des Objekts zum gleichen Zeitpunkt. Liegt keine Überschneidung vor, beträgt die Kollisionswahrscheinlichkeit Null, bei vollständiger Überschneidung 100%. Nachteilig bei diesem bekannten Verfahren ist das Beruhen des zukünftigen Verhaltens des Objekts auf einem Verhaltensmodell, das lediglich kinematische Größen, wie Richtung, Geschwindigkeit und Beschleunigung detektiert und in die Zukunft extrapoliert.

Es ist daher Aufgabe der vorliegenden Erfindung, die Nachteile aus dem Stand der Technik zu vermeiden und ein Verfahren der Ermittlung einer Kollisionswahrscheinlichkeit eines Fahrzeugs mit einem Lebewesen anzugeben.

Diese Aufgabe wird durch ein Verfahren mit den Merkmalen des Anspruchs 1 gelöst. Vorteilhafte Ausgestaltungen ergeben sich aus den abhängigen Patentansprüchen.

Bei dem erfindungsgemäßen Verfahren zur Ermittlung einer Kollisionswahrscheinlichkeit werden ausgehend von den aktuellen Positionen des Lebewesens und des Fahrzeugs eine Trajektorie des Fahrzeugs auf der Basis des kinematischen Modells und des Lebewesens auf der Basis des Verhaltensmodells als Trajektorienpaar so lange berechnet, bis entweder das Trajektorienpaar eine Kollision anzeigt oder keine Kollision anzeigt wird. Anschließend wird die Anzahl der Trajektorienpaare, die eine Kollision anzeigen, ermittelt, um hieraus die Kollisionswahrscheinlichkeit als Quotient aus der Anzahl der Trajektorienpaare, die eine Kollision anzeigen, und der gesamten Anzahl der berechneten Trajektorienpaare zu berechnen.

Damit wird die Kollisionswahrscheinlichkeit, im Folgenden auch als Kollisionsrisikowert bezeichnet, als relative Kollisionshäufigkeit berechnet, d. h. als Verhältnis der Anzahl der Fahrzeug-Lebewesen-Trajektorienpaaren, bei denen es zu einer Kollision kommen würde, zur Gesamtzahl berechneter möglicher Fahrzeug-Lebewesen-Trajektorienpaaren.

In einer Weiterbildung der Erfindung wird eine Kollision dann angezeigt, wenn der von den Trajektorien eines Trajektorienpaares angezeigte Abstand zwischen dem Fahrzeug und dem Lebewesen eine vorgegebene Schwelle unterschreitet. Eine solche Abstandsschwelle orientiert sich vorzugsweise an den menschlichen Abmessungen, insbesondere wäre beispielsweise der Halbmesser des Umkreises um den Umriss eines Fußgängers aus der Draufsicht hierfür geeignet.

Besonders vorteilhaft ist es, wenn zu inkrementellen Zeitschritten die Verfahrensschritte

b) Ausgehend von der aktuellen Position des Fahrzeugs und des Lebewesens Durchführung einer Berechnung einer Trajektorie des Fahrzeugs und des Lebewesens als Trajektorienpaar so lange, bis entweder das Trajektorienpaar eine Kollision anzeigt oder keine Kollision anzeigt wird,
c) Ermitteln der Anzahl der Trajektorienpaare, die eine Kollision anzeigen, und
d) Berechnung der Kollisionswahrscheinlichkeit als Quotient aus der Anzahl der Trajektorienpaare, die eine Kollision anzeigen und der gesamten Anzahl der berechneten Trajektorienpaare

wiederholt werden.

Dies stellt die Entwicklung des Kollisionsrisikos über den zeitlichen Ablauf des Szenarios zwischen dem Fahrzeug und dem Lebewesen, bzw. dem Fußgänger dar, so dass sich die chronologische Entwicklung der Kollisionswahrscheinlichkeit bzw. des Kollisionsrisikowerts ergibt. Dieser Kollisionsrisikowert kann dazu benutzt werden, um bei dessen Überschreitung durch einen vorgegebenen Schwellwert Fußgängerschutzsysteme auszulösen, wobei die Auslösung auch zusätzlich von dem Verlauf des Kollisionsrisikowertes abhängig gemacht werden kann.

In einer Weiterbildung der Erfindung werden mittels des Verhaltensmodells für einen oder für mehrere Zeitpunkte mögliche Aufenthaltsorte des Lebewesens unter Berücksichtigung des Bewegungszustands zum Zeitpunkt des Beginns der Berechnung eines Trajektorienpaares bestimmt.

Zur Ermittlung des zukünftig möglichen Aufenthaltsorts zu einem gegebenen Zeitpunkt werden ausgehend von einem Ort der Bewegungstrajektorie und dem Bewegungszustand auf der Basis der Verhaltensmodells für das raumzeitliche Verhalten des Lebewesens für einen oder mehrere zukünftige Zeitpunkte mögliche Aufenthaltsorte bestimmt.

Ferner wird in einer besonders bevorzugten Weiterbildung der Erfindung zur Berechnung der Trajektorien des Lebewesens ein Verhaltensmodell zugrundegelegt, das das physikalische und physiologische Bewegungsvermögen des Lebewesens und/oder empirisch ermittelte Verhaltensmuster berücksichtigt, also davon ausgeht, dass sich das Lebewesen physiologisch bedingt nicht in alle Richtungen mit dem gleichen Beschleunigungsvermögen weiterbewegen kann und darüberhinaus bestimmte verhaltensbedingte Vorzugsrichtungen aufzeigen kann. Im Gegensatz zu konventionellen Trajektoriealgorithmen wird also nach diesem Verfahren gerade nicht die derzeitige Bewegungsform in die Zukunft fortgeschrieben, sondern auf deren Basis ein beschränktes physiologisches Bewegungsvermögen und/oder verhaltensbedingte Vorzugsbewegungen berücksichtigt. Zudem haben Lebewesen bzw. Fußgänger im Gegensatz zu den sonst üblichen Objekten im Straßenverkehr die Möglichkeit eines abrupten Richtungswechsels durch Drehung um die eigene Achse, Schritte seitwärts oder nach hinten, was den Aufenthaltsort des Lebewesens gegenüber herkömmlichen Trajektorievorhersagen massiv verändert, wie aufgrund diverser Bewegungsstudien festgestellt werden konnte.

In der nachfolgenden Beschreibung wird unter einem Lebewesen ein Radfahrer, ein Fußgänger oder ein Tier verstanden. Unter einem Aufenthaltsort des Lebewesens wird ein Bereich verstanden, in dem sich das Lebewesen in einem zukünftigen oder nächsten Zeitpunkt mit einer hohen Wahrscheinlichkeit (größer als 50 %, insbesondere größer als 70 % und weiter bevorzugt größer als 90 %) aufhalten wird.

Durch die sensorische Aufnahme von Umgebungsinformationen, beispielsweise unter Verwendung bildgebender Verfahren, lassen sich einerseits eine Bewegungstrajektorie und andererseits ein Bewegungszustand für das Lebewesen ermitteln. Durch die Verknüpfung dieser beiden Informationen mit dem physiologischen Bewegungsvermögen des Lebewesens, das biomechanische Gegebenheiten und/oder verhaltensspezifische Vorzugsrichtungen des erfassten Lebewesens berücksichtigt, lassen sich mit größerer Genauigkeit für einen oder mehrere zukünftige Zeitpunkte mögliche Aufenthaltsorte bestimmen. Diese Informationen können dann der Berechnung der Kollisionswahrscheinlichkeit zugeführt werden.

Die Sensorik zur Erfassung der Umgebungsinformationen kann beispielsweise Radar, Lidar, Kameras, Ultraschallsensoren umfassen oder durch Kommunikationstechnologien, wie z.B. RFID (RFID = Radio Frequency Identification) oder GPS (GPS = Global Positioning System) gebildet oder unterstützt sein.

Als Parameter für die Ermittlung des Bewegungszustands und/oder des zukünftig möglichen Aufenthaltsorts werden einer oder mehrere der folgenden Parameter ermittelt und verarbeitet:

- Eine Position des Lebewesens. Hierunter wird insbesondere eine Relativposition des Lebewesens zu dem Fahrzeug verstanden. Das Kriterium kann auch ein Abstand oder eine Relativposition des Lebewesens zu einem ermittelten Bewegungsverlauf des Fahrzeugs sein.
- Eine Ausrichtung des Lebewesens zur Umgebung. Hierunter wird insbesondere verstanden, in welchem Winkel das Lebewesen zur Umgebung, insbesondere zum Fahrzeug oder zu einer Fahrbahn, sich befindet. Aufgrund des physiologischen Bewegungsvermögens des Lebewesens spielt die Ausrichtung des Lebewesens zur Umgebung, z.B. mit dem Rücken zur Fahrbahn oder dem Fahrzeug stehend oder seitlich zur Fahrbahn oder dem Fahrzeug gehend, eine große Rolle für den zukünftig möglichen Aufenthaltsort.
- Eine translatorische und/oder rotatorische Geschwindigkeit des Lebewesens. Das physiologische Bewegungsvermögen und damit der zukünftig mögliche Aufenthaltsort hängen von einer Geschwindigkeit des Lebewesens ab, mit welcher sich dieses bewegt.
- Eine translatorische und/oder rotatorische Beschleunigung des Lebewesens, von welcher aufgrund des physiologischen Bewegungsvermögens des Lebewesens die von diesem erreichbare maximale Geschwindigkeit und/oder das weitere Beschleunigungsvermögen abhängen.
- Ein vorliegender Krümmungsradius der Bewegung des Lebewesens und/oder eine Änderung in einer Bewegungsrichtung oder eines Krümmungsradius der Bewegung des Lebewesens. Diesem zu berücksichtigenden Parameter liegt die Überlegung zu Grunde, dass ein Lebewesen, das bereits eine Kurve vollzieht, eine Änderung der Bewegungsrichtung und/oder der Geschwindigkeit und/oder der Beschleunigung nur eingeschränkt vornehmen kann im Vergleich zu einem geradeaus laufenden Lebewesen.
- Ein insbesondere witterungsabhängiger Bodenreibwert des Untergrunds, welcher z.B. bei ermittelter Feuchtigkeit skaliert werden kann. Der Bodenreibwert ist von entscheidender Bedeutung für das Beschleunigungsvermögen des Lebewesens.
- Eine Klasse des Lebewesens, insbesondere das Alter des Lebewesens, ein vorgegebenes Körperabmaß (bspw. Höhe, Bein- oder Schrittlänge), ein Geschlecht oder eine Gattung (bspw. Mensch/Tier/Kind/Fahrradfahrer)
- ein Bewegungsvermögen durch einen oder mehrere Seitwärtsschritte
- ein Bewegungsvermögen durch einen oder mehrere Rückwärtsschritte
- Bewegungsvermögen in der Schwerpunktbewegung und/oder Körperneigung des Lebewesens bzw. des Fußgängers, die insbesondere im Abgleich mit empirisch ermittelten Bewegungsmuster auf ein spezielles Bewegungsverhalten schließen lassen.

Gerade die Fähigkeiten einzig von Lebewesen, sich um die eigene Achse zu drehen, seitwärts oder zumindest aus dem Stand abrupt rückwärts zu gehen, sich also entgegen der aktuellen Ausrichtung des Körpers zu bewegen, andererseits aber eben auch gerade ein begrenztes und auch unterschiedliches physiologisches Bewegungsvermögen in alle Richtungen ergeben für die Vorhersage des wahrscheinlichen Aufenthaltsorts signifikant andere Ergebnisse als konventionelle Trajektoriealgorithmen.

Die oben aufgeführten Parameter können beispielsweise durch die Auswertung von Bildinformationen und/oder Ortsinformationen bestimmt werden.

Der Begriff Bewegungszustand eines Lebewesens bzw. eines Fußgängers umfasst auch eine Bewegungsänderung des Lebewesens bzw. des Fußgängers gefasst. Dabei sind insbesondere solche Parameter von großer Bedeutung, die auf eine kurzfristige Bewegungsänderung des Lebewesens bzw. des Fußgängers hinweisen.

Wenngleich bestimmte Parameter hiervon, wie die Position, Ausrichtung, translatorische Geschwindigkeit und Beschleunigung oder der Kurvenradius, bereits auch für konventionelle Trajektoriealgorithmen ebenfalls erfasst und berücksichtigt werden, so unterscheidet sich das vorliegende Verfahren doch daran, dass für die Vorhersage des wahrscheinlichen Aufenthaltsorts immer das physiologische Bewegungsvermögen und/oder verhaltensbedingte Vorzugsrichtungen berücksichtigt werden, wodurch keine starre Fortsetzung des bisherigen Bewegungszustands, sondern eine Einbeziehung und Begrenzung auf das aktuell physiologische Mögliche und/oder das verhaltensbedingt Wahrscheinliche erfolgt.

In einer weiteren Ausgestaltung wird aus einer Datenbank oder einem Kennlinienfeld ein dem oder den ermittelten Parametern zugeordneter möglicher zukünftiger Aufenthaltsort des Lebewesens ausgelesen, indem die messtechnisch erfassten Parameter beispielsweise mit in der Datenbank oder dem Kennlinienfeld hinterlegten Parametern verglichen werden. Die der Datenbank oder dem Kennlinienfeld zu Grunde liegenden Parameter können beispielsweise durch Versuche ermittelt worden sein.

Alternativ werden einer oder mehrere der Parameter einem Modellrechner zugeführt zur Ermittlung des Aufenthaltsorts des Lebewesens, wobei dem Modellrechner ein abstrahiertes Bewegungsmodell für Lebewesen zu Grunde gelegt ist. Hierbei werden die messtechnisch erfassten Parameter dem Modellrechner zugeführt, welcher anhand des Bewegungsmodells für Lebewesen in der Lage ist, den zukünftig möglichen Aufenthaltsort zu ermitteln. Dieses Vorgehen weist den Vorteil auf, dass auf einfachere Weise unterschiedliche Klassen von Lebewesen berücksichtigt werden können, indem durch entsprechende Skalierung einzelne Parameter stärker oder schwächer berücksichtigt werden. Ein weiterer Vorteil besteht darin, dass der zukünftig mögliche Aufenthaltsort auf Basis physikalischer Gegebenheiten und empirisch ermittelter Daten bestimmt werden kann. Hierdurch lässt sich eine hohe Genauigkeit in der Vorhersage erzielen.

Gemäß einer weiteren Ausgestaltung wird zur Ermittlung des zukünftig möglichen Aufenthaltsorts ein Bewegungsverlauf in Abhängigkeit der aktuellen Geschwindigkeit, der aktuellen Ausrichtung und der aktuellen Körperrotation ermittelt.

In einer weiteren Ausgestaltung wird zur Ermittlung des zukünftig möglichen Aufenthaltsorts das maximale Beschleunigungsvermögen des Lebewesens in Abhängigkeit seiner Bewegungsgeschwindigkeit berücksichtigt. Hierbei liegt die Überlegung zu Grunde, dass das Beschleunigungsvermögen eines Lebewesens über den von einem Lebewesen abgedeckten Geschwindigkeitsbereich nicht konstant, sondern variabel ist. Gleiches gilt für das Verzögerungsvermögen eines Lebewesens. Weiterhin hat sich herausgestellt, dass das Verzögerungsvermögen eines Lebewesens größer ist als das Beschleunigungsvermögen. Diese Erkenntnis kann sich bei der Ermittlung des zukünftig möglichen Aufenthaltsorts zu Nutze gemacht werden. Neben einem maximalen Beschleunigungsvermögen in die bisherige Bewegungsrichtung wird dabei vorzugsweise auch ein maximales Beschleunigungsvermögen entgegengesetzt zur bisherigen Bewegungsrichtung und/oder Ausrichtung des Lebewesens vorgegeben.

So werden für das Lebewesen vorzugsweise zumindest einer der folgenden Parameter vorgegeben:

- eine Maximalgeschwindigkeit, ab der das Beschleunigungsvermögen in bisherige Bewegungsrichtung Null wird, d.h. die absolute Höchstgeschwindigkeit,
- eine Maximalbeschleunigung sowohl in als auch entgegen der Ausrichtung eines stehenden Lebewesens,
- eine Geschwindigkeit, bei der das maximale Beschleunigungsvermögen in die bisherige Bewegungsrichtung maximal ist,
- eine Geschwindigkeit, bei der das maximale Beschleunigungsvermögen entgegengesetzt zur bisherigen Bewegungsrichtung und/oder Ausrichtung des Lebewesens betragsmäßig maximal ist, d.h. bei der das Lebewesen maximal abbremsen kann,
- eine Maximalgeschwindigkeit entgegen der Ausrichtung des Lebewesens, ab der das Beschleunigungsvermögen entgegen der Ausrichtung Null wird. Aus diesen Werten können dann ausgehend von einer aktuellen Bewegungsform das dementsprechende Beschleunigungsvermögen in Bewegungsrichtung sowie entgegen, also das Abbremsvermögen bestimmt werden. Alternativ können natürlich entsprechende Kennlinien hinterlegt sein.

Diese Werte sind vorzugsweise in Abhängigkeit von der Klasse des Lebewesens, insbesondere Alter, Geschlecht und Körperabmaßen variierend vorgegeben.

In einer weiteren Ausgestaltung wird zur Ermittlung des zukünftig möglichen Aufenthaltsorts ein minimal durchlaufbarer Kurvenradius in Abhängigkeit der vorliegenden Laufgeschwindigkeit und/oder -beschleunigung berücksichtigt. Die Kenntnis eines minimal durchlaufbaren Kurvenradius ermöglicht eine Prognose wie schnell ein Lebewesen seine Richtung ändern kann, um beispielsweise über eine Fahrbahn zu laufen oder mit dem Bewegungsverlauf des Fahrzeugs zu kreuzen.

Eine weitere Ausgestaltung sieht vor, dass zur Ermittlung des zukünftig möglichen Aufenthaltsorts ein maximales Verzögerungsvermögen in Abhängigkeit der Bewegungsgeschwindigkeit und/oder einem Kurvenradius der Bewegung des Lebewesens berücksichtigt wird. Mit dieser Information kann beispielsweise berücksichtigt werden, ob ein potentiell mit dem Fahrzeug kollidierendes Lebewesen in der Lage ist, rechtzeitig vor einem Kollisionsbereich zum Stehen zu kommen oder sich von dem Kollisionsbereich zu entfernen.

Eine weitere Ausgestaltung sieht vor, zur Ermittlung des zukünftig möglichen Aufenthaltsorts einen Winkel zu berücksichtigen, in dem das Lebewesen zu einem ermittelten Fahrverlauf des Fahrzeugs steht oder sich zu diesem bewegt, wobei in Abhängigkeit des Winkels ermittelt wird, in welcher Zeit das Lebewesen sich in Richtung des Fahrverlaufs drehen und im Wesentlichen gleichzeitig beschleunigen kann, um in den Bereich des Fahrverlaufs zu gelangen. Die Kenntnis des Winkels sowie die von dem Lebewesen benötigte Zeit, um z.B. auf die Fahrbahn zu gelangen, ermöglichen eine präzisere Abschätzung eines zukünftig möglichen Aufenthaltsorts und damit eine verbesserte Abschätzung eines Kollisionsrisikos.

Als Winkel wird ein Winkel zwischen 150° und 210° und damit ein mit dem Rücken zum Fahrverlauf stehendes oder sich bewegendes Lebewesen berücksichtigt. Alternativ wird insbesondere als Winkel ein Winkel zwischen 60° und 120° und damit ein seitlich zum Fahrverlauf stehendes oder sich bewegendes Lebewesen berücksichtigt. Der Fahrverlauf kann hierbei mit dem Verlauf einer Fahrbahn übereinstimmen.

Zur Ermittlung des zukünftig möglichen Aufenthaltsorts wird eine Relativposition des Lebewesens zum Fahrverlauf, insbesondere ein Abstand berücksichtigt, indem das Lebewesen zu dem Fahrverlauf steht oder sich zu diesem bewegt, wobei in Abhängigkeit der Relativposition ermittelt wird, in welcher Zeit das Lebewesen beschleunigen kann, um in den Bereich des Fahrverlaufs zu gelangen.

Es ist ferner vorgesehen, dass zur Ermittlung des zukünftig möglichen Aufenthaltsorts Umgebungsinformationen und/oder Hindernisse berücksichtigt werden. Diese Informationen können beispielsweise durch digitale Karten oder die Umfeldsensorik ermittelt werden. Die Berücksichtigung von Hindernissen, z.B. einem Straßenverlauf, dem Vorhandensein von Häuserwänden und dergleichen, ermöglicht eine weitere Steigerung der Vorhersagegenauigkeit des zukünftig möglichen Aufenthaltsorts.

Der so ermittelte Aufenthaltsort des Lebewesens dient als Eingangsgröße für die Berechnung der Trajektorie eines Trajektorienpaares um für die Berechnung der Kollisionswahrscheinlichkeit verwendet werden zu können.

In einer weiteren Ausgestaltung wird der Aufenthaltsort in mehrere Bereiche mit unterschiedlichen Aufenthaltswahrscheinlichkeiten unterteilt. Mit anderen Worten bedeutet dies, dass für einen ermittelten, zukünftig möglichen Aufenthaltsort einzelne Bereiche mit Aufenthaltswahrscheinlichkeiten versehen werden, wobei die Aufenthaltswahrscheinlichkeit ein Maß für die Wahrscheinlichkeit ist, mit der sich das Lebewesen in den nächsten Millisekunden oder Sekunden, ausgehend von der über die Zeit gemessenen Position (Bewegung), aufhalten wird.

Anhand der Aufenthaltswahrscheinlichkeiten können die fortschreitenden Teiltrajektorien von einem Fußgänger eines Trajektorienpaares bestimmt werden, die zur Berechnung der Kollisionswahrscheinlichkeit erforderlich sind.

Die Erfindung umfasst auch ein Fahrzeug mit einem Schutzsystem für Lebewesen, vorzugsweise für Fußgänger außerhalb des Fahrzeugs, insbesondere Fußgängerschutzeinrichtungen ausgestattet zur Durchführung des Verfahrens

- mit zumindest einer Sensorik, um Umgebungsinformationen zu erfassen,
- mit einer Recheneinheit, welche die Umgebungsinformationen auswertet, um ein Lebewesen, insbesondere einen Fußgänger zu identifizieren, für das Lebewesen und das Fahrzeug eine Bewegungstrajektorie als Trajektorienpaar ermittelt und daraus ein Kollisionswahrscheinlichkeit und damit die Notwenigkeit zur Auslösung eines Schutzsystems ableitet, wobei
- insbesondere die Sensorik zur Erfassung von Parametern von Lebewesen und deren physiologischem Bewegungsvermögen ausgebildet ist sowie
- die Recheneinheit zur Ermittlung des zukünftig möglichen Aufenthaltsorts zu dem gegebenen Zeitpunkt ausgehend von einem Ort der Bewegungstrajektorie und dem Bewegungszustand unter Berücksichtigung eines physiologischen Bewegungsvermögens des Lebewesens für einen oder mehrere zukünftige Zeitpunkte ausgebildet ist.

Die Kollisionswahrscheinlichkeiten für Kollisionssituationen zwischen Fußgänger und Fahrzeug können vorteilhafterweise mithilfe von einem nachfolgend beschriebenen Berechnungsverfahren berechnet werden.

Das erfindungsgemäße Verfahren enthält vorzugsweise folgende Verfahrensschritte:

1. Während der Initialphase, bevor das Fahrzeug in Betrieb genommen wird, wird eine endliche Anzahl an typischen Bewegungsausgangssituationen (Bewegungsausgangszustand) für verschiedenen Fußgängertypen gemessen und in einem am Bord des Fahrzeugs befindlichen Speicher abgespeichert. Diese Ausgangssituation kann wie folgt festgelegt sein:

Ausgangssituation 1: Fußgänger steht, Geschwindigkeit v=0 m/s, Beschleunigung a=0m/s$^2$, Drehrate w=0°/s;
Ausgangssituation 2: ein erwachsener Fußgänger geht mit Geschwindigkeit v=1m/s, Beschleunigung a=0m/s$^2$, Drehrate w=0°/s;
Ausgangssituation 2: ein erwachsener Fußgänger geht mit Geschwindigkeit v=1m/s, Beschleunigung a=0m/s$^2$ und dreht sich dabei um Vertikalachse Drehrate w=1°/s; ...

2. Für jede dieser Ausgangssituationen aus dem Schritt 1 wird eine Schar möglicher Bewegungstrajektorien für einen vorgegebenen bestimmten Zeitraum von z. B. 3s mit inkrementellen Schritten $\Delta t$ von z. B 0.1s berechnet. Dabei wird das oben beschriebene Berechnungsverfahren der stochastischen Modellierung des Fußgängers verwendet. Aus diesen numerischen Berechnungen erhält man für jede Bewegungsausgangssituation eine Schar von Trajektorien mit den Zwischenaufenthaltspunkten des Fußgängers.

3. Die Bewegungsausgangssituationen werden mit den berechneten Trajektorien-Scharen auf dem Speicher am Bord des Fahrzeugs hinterlegt.

4. Die Kollisionsrisikoberechnung während des Betriebs des Fahrzeugs erfolgt dann wie folgt:

4.1. Durch ein geeignetes Sensorsystem wird der Bewegungszustand des Fußgängers erfasst. Die Eigendynamik des Fahrzeugs zu diesem Zeitpunkt wird ebenfalls erfasst.

4.2. Die am nächsten liegende Bewegungsausgangssituation des Fußgängers, welche während der Initialphase im Schritt 1 gemessen und im Speicher hinterlegt ist, wird ausgewählt.

4.3. Die Trajektorien-Schar, welche zu dieser ausgewählten Bewegungsausgangssituation im Schritt 2 der Initialphase berechnet und dieser Bewegungsausgangssituation zugeordnet abgespeichert ist, wird abgelesen und der Ausrichtung des Fußgängers entsprechend und um die detektierte Position des Fußgängers platziert.

4.4. Auf Basis der Informationen aus 4.1 bis 4.3 wird das Kollisionsrisiko wie folgt berechnet:

a. Die Fahrzeugbewegung wird in kleinen Zeitschritten extrapoliert. Die Zeitschritte entsprechen den Zeitschritten bei der Berechnung der Trajektorien-Schar des Fußgängers: $\Delta t$ von z. B 0.1s. So wird ein Fahrbahnschlauch gebildet, wobei dieser Fahrbahnschlauch Bereiche zu jeweiligen Zeitschritten aufweist. Diese Bereiche stellen Bereich dar, wo eine Kollision eines Fußgängers mit dem Fahrzeug unvermeidbar ist. Diese Bereiche werden nachfolgend Kollisionszone genannt.

b. Zu jedem Zeitschritt $\Delta t$ werden nur die Aufenthaltspunkte der Trajektorien der im Schritt 4.3 ausgewählten Trajektorien-Schar betrachtet, wobei die Aufenthaltspunkte zu dem jeweiligen Zeitschritt die möglichen Aufenthaltspositionen des Fußgängers zu diesem Zeitschritt wiedergeben. Dann wird überprüft, ob bzw. wie viele dieser ausgewählten Aufenthaltspunkte in der Kollisionszone vom Fahrzeug liegen. Ist das der Fall, so liegt eine Einzelkollision zwischen dem Fahrzeug und dem Fußgänger vor. Die Anzahl der Trajektorien in der Trajektorien-Schar mit den Aufenthaltspunkten, welche eine Einzelkollision voraussagen, werden bestimmt.

c. Für die nachfolgenden Berechnungsschritte in den nächsten Zeitschritten werden die Trajektorien, bei denen Kollisionen aufgetreten sind, herausgenommen.

d. Die Schritte b und c werden in inkrementellen Zeitschritten von $\Delta t$ wiederholt, um auch für die nachfolgenden Zeitschritte die Anzahl der Einzelkollisionen festzustellen.

e. Die Schritte a bis d werden solange durchgeführt, bis das Fahrzeug den Fußgänger soweit passiert hat, so dass keine Kollisionen mehr auftreten können.

4.5. Die Zahl der Trajektorien mit zumindest einem Aufenthaltspunkt, welcher in einer der Kollisionszonen vom Fahrzeug liegt, wird auf diese Weise ermittelt und der Quotient zwischen der Zahl der Kollisions-Trajektorien und der Gesamtanzahl der Trajektorien gebildet. Dieser Quotient gibt Auskünfte darüber, wie hoch die Kollisionswahrscheinlichkeit ist. Aus diesem Quotient lässt sich so das Kollisionsrisiko bestimmen.

4.6. Optional wird der Quotient mit eine Anzahl von vorab definierten Schwellen verglichen. Unterliegt der Quotient eine erste Schwelle mit niedrigstem Schwellwert, so liegt keine Kollisionsgefahr. Übersteigt der Quotient die erste Schwelle aber unterliegt weiterhin eine zweite Schwelle mit zweitniedrigstem Schwellwert, so liegt eine geringe Kollisionsgefahr. Diese geringe Kollisionsgefahr kann bspw. durch Alarmsignal an den Fahrer des Fahrzeugs behoben werden. Übersteigt der Quotient jedoch eine letzte Schwelle mit höchstem Schwellwert, so liegt eine akute Kollisionsgefahr zwischen dem Fahrzeug und Fußgänger. In diesem Fall ist bspw. Maßnahme zur Minderung der Unfallfolgen durch ein autonomes vollbremsen des Fahrzeugs notwendig.

5. Die Bestimmung der Kollisionswahrscheinlichkeit im Schritt 4 kann iterativ zu bestimmten Zeitabständen von z. B. 0.5s wiederholt werden. Darüber hinaus kann die Fahrzeugbewegung in einer weiteren Rechnungsschleife auch über ein stochastisches Modell variiert werden.

Detaillierter beschrieben, wird während der Initialphase, bevor das Fahrzeug in Betrieb genommen wird, eine endliche Anzahl an typischen Bewegungsausgangssituationen Px-BS1(v1, a1, w1), Px-BS2(v2, a2, w2), ..., Px-BSn(vn, an, wn) für einen Musterfußgänger Px bei Berücksichtigung der Bewegungsvermögen des Fußgängers vorab erstellt. Dabei sind v1, v2, ..., vn verschiedene Ausgangsgeschwindigkeiten, a1, a2, ..., an verschiedene Ausgangsbeschleunigungen und w1, w2, ..., wn verschiedene Ausgangsdrehraten des Musterfußgängers Px.

Für jede dieser Bewegungsausgangssituationen Px-BS1(v1, a1, w1), Px-BS2(v2, a2, w2), ..., Px-BSn(vn, an, wn) wird jeweils eine Schar möglicher Bewegungstrajektorien BT-Px-BS1, BT-Px-BS2, ..., BT-Px-BSn für einen vorgegebenen bestimmten Zeitraum (z. B. 3s) mit inkrementellen Schritten Δt (z. B 0.1s) berechnet. Dabei wird das Berechnungsverfahren mit der stochastischen Modellierung des Fußgängers verwendet. Aus diesen numerischen Berechnungen erhält man für jede Bewegungsausgangssituation eine Schar von Trajektorien mit den Zwischenaufenthaltspunkten des Musterfußgängers Px. Der Musterfußgänger Px repräsentiert beispielsweise 90% alle erwachsenen Männer.

Es werden weitere Bewegungsausgangssituationen für andere Gruppen von Fußgängern wie erwachsene Frauen, alte Fußgänger, Kinder, Radfahrer oder Tiere wie Hunde erstellt und entsprechende Bewegungstrajektorien-Scharen ermittelt.

Die Bewegungsausgangssituationen werden mit den ermittelten zugehörigen Trajektorien-Scharen für späteren Gebrauch auf einem fahrzeuginternen Speicher hinterlegt.

Bein Betrieb des Fahrzeugs, bzw. beim Fahren durch eine Innenstadt werden zuerst die Fußgänger in der Fahrzeugumgebung, insb. im Bereich bzw. in der Nähe des Fahrbahnschlauchs des Fahrzeugs mittels der am Bord des Fahrzeugs befindlichen Umfeldsensorik erfasst.

Weiterhin werden die Bewegungszustände der aktuell erfassten Fußgänger mithilfe von geeigneten Sensoren bspw. in Form von Geschwindigkeits-, Beschleunigungs- und Drehratenwerten v0, a0, w0, ... erfasst. Diese Bewegungszustände dienen als Bewegungsausgangssituationen zur Ermittlung vom Kollisionsrisiko verwendet. Die Bewegungszustände vx, ax, wx der früher bereits erfassten Fußgänger werden vorteilhafterweise weiterhin erfasst.

Zum gleichen Zeitpunkt wird die Eigendynamik, nämlich die Geschwindigkeit, Beschleunigung und/oder Drehrate des Fahrzeugs ebenfalls erfasst. Die Fahrzeugbewegung wird basierend auf die gemessenen Eigendynamikwerte des Fahrzeugs in kleinen Zeitschritten extrapoliert. Die Zeitschritte entsprechen den Zeitschritten bei der Berechnung der Trajektorien-Schar des Fußgängers während der Initialphase: Δt. So wird ein Fahrbahnschlauch gebildet, wobei dieser Fahrbahnschlauch Bereiche zu jeweiligen Zeitschritten aufweist. Diese Bereiche sind die Kollisionszonen zu jeweiligen Zeitschritten.

Wird ein Fußgänger P0 erfasst, so werden die Bewegungszustandswerte v0, a0, w0, ... des Fußgängers P0 mit den während der Initialphase gemessen und abgespeicherten typischen Bewegungsausgangssituationenwerten Px-BS1(v1, a1, w1), Px-BS2(v2, a2, w2), ... Px-BSi(vi, ai, wi), ..., Px-BSn(vn, an, wn) verglichen.

Optional wird vor dem Vergleichen der Bewegungszustandswerte der Art des Fußgängers P0, nämlich zu welcher Fußgängergruppe dieser Fußgänger P0 zugeordnet werden soll, anhand der diesem Fußgänger P0 zugehörigen Messdaten der Umfeldsensorik bestimmt. Weisen die Messdaten der Umfeldsensorik für einen erwachsenen männlichen Fußgänger charakteristische Merkmale auf, so wird der neu erfasste Fußgänger P0 der Gruppe "Erwachsene Männer" zugeordnet. Weisen die Messdaten der Umfeldsensorik dagegen Merkmale auf, die für ein Kind typisch sind, so wird der Fußgänger P0 der Gruppe "Kinder" zugeordnet. Diese Zuordnung der Gruppe erleichtert das Finden der in Frage kommenden Bewegungsausgangssituationenwerte aus den zahlreichen während der Initialphase gemessen und abgespeicherten Bewegungsausgangssituationenwerten aus dem Speicher.

Wird der neu erfasste Fußgänger P0 der Gruppe "Erwachsene Männer" zugeordnet, so werden nur die Bewegungsausgangssituationenwerte Px-BS1(v1, a1, w1), Px-BS2(v2, a2, w2), ... Px-BSi(vi, ai, wi), ..., Px-BSn(vn, an, wn), die der Gruppe "Erwachsene Männer" zugeordnet abgespeichert wurden, abgelesen und zum Vergleichen mit den Bewegungszustandswerten v0, a0, w0 herangezogen.

Weisen die Bewegungszustandswerte v0, a0, w0, ... des Fußgängers P0, die meisten Ähnlichkeiten mit einem Satz von Bewegungsausgangssituationenwerten bspw. Px-BSi(vi, ai, wi) auf, so wird die Bewegungstrajektorien-Schar BT-Px-BSi, welche diesem Satz von Bewegungsausgangssituationenwerten Px-BSi(vi, ai, wi) zugeordnet abgespeichert wurden, zur Kollisionsermittlung herangezogen.

Diese ausgewählte Bewegungstrajektorien-Schar BT-Px-BSi zu diesen Bewegungsausgangssituationenwerten Px-BSi(vi, ai, wi) wird in passender Ausrichtung, wobei diese Ausrichtung vorzugsweise die Ausrichtung des Fußgängers P0 bzgl. der Himmelsrichtung ist, um die detektierte Position des Fußgängers P0 platziert, wobei der Ausgangspunkt der Bewegungstrajektorien-Schar sich vorzugsweise mit dem Mittelpunkt des Fußgängers P0 überlappt.

Zu jedem oben genannten Zeitschritt Δt werden die Aufenthaltspunkte der Trajektorien der ausgewählten Trajektorien-Schar zur Kollisionsrisikoermittlung herangezogen, wobei die Aufenthaltspunkte zu dem jeweiligen Zeitschritt die möglichen Aufenthaltspositionen des Fußgängers zu diesem Zeitschritt wiedergeben.

Dann wird überprüft, wie viele dieser ausgewählten Aufenthaltspunkte in der jeweiligen Kollisionszone des Fahrzeugs liegen. Die Aufenthaltspunkte, die in der Kollisionszone liegen, deuten jeweils auf eine Einzelkollision zwischen dem Fahrzeug und dem Fußgänger hin. Die Anzahl der Trajektorien von der Trajektorien-Schar mit den Aufenthaltspunkten, welche eine Einzelkollision voraussagen, wird bestimmt. Die Trajektorien mit den Kollisionsaufenthaltspunkten werden bei den nachfolgenden Berechnungsschritten in den folgenden Zeitschritten nicht mehr berücksichtigt.

Die Bestimmung der in der Kollisionszone liegenden Aufenthaltspunkte sowie der Anzahl der Trajektorien mit diesen Aufenthaltspunkten wird in inkrementellen Zeitschritten von $\Delta t$ solange wiederholt, bis das Fahrzeug den Fußgänger soweit passiert hat, so dass keine Kollisionen mehr auftreten können.

Anschließend wird die Anzahl aller (Kollisions-)Trajektorien mit zumindest einem in den Kollisionszonen liegenden Aufenthaltspunkt ermittelt und der Quotient zwischen der Zahl der Kollisions-Trajektorien und der Gesamtanzahl der Trajektorien gebildet. Dieser Quotient gibt Auskünfte darüber, wie hoch die Kollisionswahrscheinlichkeit ist. Aus diesem Quotient lässt sich so die das Kollisionsrisiko bestimmen.

Vorteilhafterweise wird der Quotient mit eine Anzahl von vorab definierten Schwellen verglichen. Unterliegt der Quotient eine erste Schwelle mit niedrigstem Schwellwert, so liegt keine Kollisionsgefahr. Übersteigt der Quotient die erste Schwelle aber unterliegt weiterhin eine zweite Schwelle mit zweitniedrigstem Schwellwert, so liegt eine geringe Kollisionsgefahr. Diese geringe Kollisionsgefahr kann bspw. durch Alarmsignal an den Fahrer des Fahrzeugs behoben werden. Übersteigt der Quotient jedoch eine letzte Schwelle mit höchstem Schwellwert, so liegt eine akute Kollisionsgefahr zwischen dem Fahrzeug und Fußgänger. In diesem Fall ist bspw. Maßnahme zur Minderung der Unfallfolgen durch ein autonomes Vollbremsen des Fahrzeugs notwendig.

Das oben beschriebene Kollisionsrisikoberechnungsverfahren ist wesentlich weniger rechenzeitintensiv und ermöglicht eine echtzeitnahe Berechnung der Kollisionswahrscheinlichkeit.

Durch das oben beschriebene Berechnungsverfahren ist eine direkte Kollisionsrisikoberechnung bei Auftreten einer Kollisionssituation in der erforderlichen Echtzeit ermöglicht.

Die Erfindung wird nachfolgend unter Bezugnahme auf die Zeichnungen näher erläutert. Es zeigen:

Fig. 1   eine schematische Darstellung einer Szene aus einem Fahrzeug und einem Fußgänger zur Erläuterung des erfindungsgemäßen Verfahrens,

Fig. 2   ein Diagramm, das den Zusammenhang zwischen lateralem Beschleunigungs- und Verzögerungsvermögen eines Lebewesens in Abhängigkeit einer von ihm erreichten Geschwindigkeit verdeutlicht,

Fig. 3   ein Diagramm, das den Zusammenhang zwischen Rotationsvermögen eines Lebewesens in Abhängigkeit einer von ihm erreichten lateralen Geschwindigkeit verdeutlicht,

Fig. 4   ein Polardiagramm, welches den Bewegungsspielraum eines stehenden Menschen unter Berücksichtigung von lateralem Beschleunigungsvermögen sowie Rotationsvermögen zeigt,

Fig. 5   ein Polardiagramm, welches den Bewegungsspielraum eines stehenden Menschen unter Berücksichtigung von lateralem Beschleunigungsvermögen sowie Rotationsvermögen sowie Bewegungsvermögen seitwärts und rückwärts zeigt,

Fig. 6   ein Diagramm, welches den Bewegungsspielraum eines sich mit einer Geschwindigkeit fortbewegenden Menschen in Längs- und Querrichtung verdeutlicht,

Fig. 7   ein Ablaufdiagramm, aus dem das Verfahren zur Bestimmung der Trajektorie eines Fußgängers hervorgeht,

Fig. 8   eine schematische Darstellung, wie Trajektorien-Scharen für eine endliche Anzahl an typischen Bewegungsausgangssituationen für verschiedenen Fußgängertypen während der Initialphase ermittelt werden, und

Fig. 9   eine schematische Darstellung, wie die Kollisionswahrscheinlichkeit erfindungsgemäß ermittelt wird.

Um die Kollisionswahrscheinlichkeit zwischen einem Fahrzeug und einem Lebewesen, insbesondere einem Fußgänger, Radfahrer oder Tier, bestimmen zu können, ist es notwendig, einerseits einen Bewegungsverlauf des Fahrzeugs (sog. Fahrschlauch) und andererseits einen Bewegungsverlauf (sogenannte Trajektorie) des Lebewesens zuverlässig zu prognostizieren. Während die Ermittlung des Fahrschlauchs eines Fahrzeugs bereits mit hoher Präzision auf der Basis eines kinematischen Modells vornehmbar ist, ist die Ermittlung des Bewegungsverlaufs des Lebewesens mit einer Vielzahl von Unsicherheitsfaktoren behaftet, die in einem Verhaltensmodell hinsichtlich des raumzeitlichen Verhaltens berücksichtigt werden müssen.

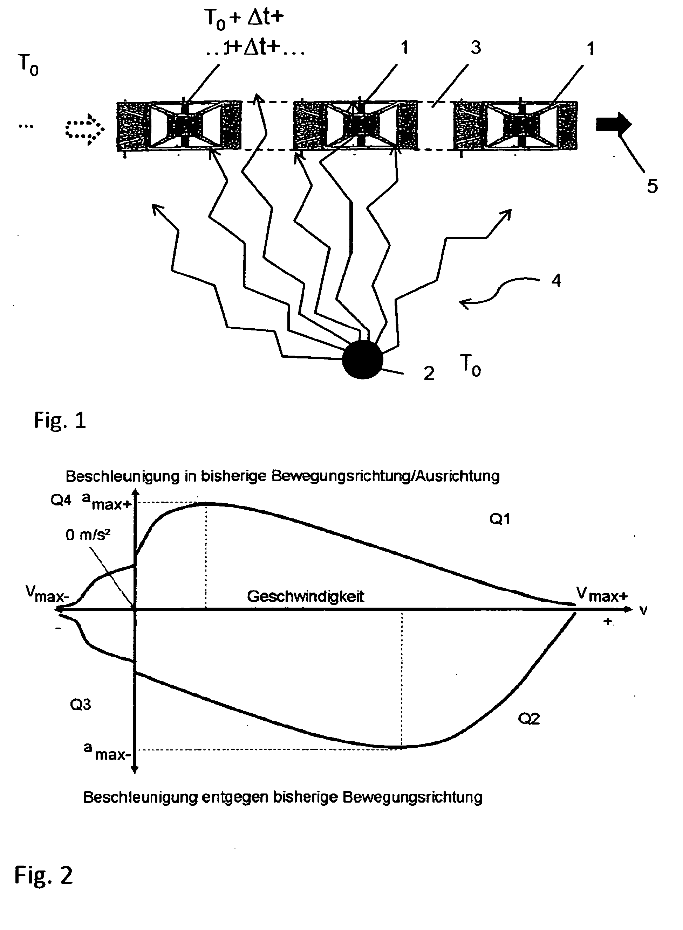

Figur 1 zeigt eine schematisch dargestellte Szene mit einem Fahrzeug 1 und einem Fußgänger 2, in der sich das Fahrzeug 1 in Richtung des Pfeils 5 bewegt.

Ausgangspunkt des erfindungsgemäßen Verfahrens zur Berechnung der Kollisionswahrscheinlichkeit sind die aktuellen Positionen und Bewegungszustände des Fahrzeugs 1 und des Fußgängers 2 zu einem Zeitpunkt $T_0$.

Ausgehend von diesen Positionen wird sowohl für das Fahrzeug 1 auf der Basis eines kinematischen Modells als auch für den Fußgänger 2 auf der Basis eines Verhaltensmodells der weitere Bewegungsverlauf auf der Basis von inkrementellen Zeitschritten $\Delta t$'s synchron ermittelt, wobei ein $\Delta t$ jeweils ein Vorhersagezeitraum ist. Somit lässt sich über die aufeinanderfolgenden Vorhersagezeiträume $\Delta t$'s gleichzeitig eine fortschreitende Trajektorie für das Fahrzeug 1 als auch für den Fußgänger 2 als Trajektorienpaar bestimmen, die sich jeweils aus für den Vorhersagezeitraum $\Delta t$ bestimmten Teiltrajektorien zusammensetzen. Da sich für den Fußgänger 2 für jeden Vorhersagezeitraum $\Delta t$ mehrere Bewegungsmöglichkeiten ergeben, wobei dies in der Regel nur eingeschränkt für das Fahrzeug 2 gilt, werden mit dem erfindungsgemäßen Verfahren für den Zeitpunkt $T_0$ mehrere Trajektorienpaare bestimmt.

Für das Fahrzeug 1 lässt sich die Trajektorie bzw. der Fahrschlauch 3 relativ genau auf der Basis der erfassten kinematischen Daten, wie Geschwindigkeit, Beschleunigung und Richtung für mehrere aufeinanderfolgende Vorhersagezeiträume $\Delta t$'s zuverlässig vorhersagen. Das relativ einfache kinematische Modell kann natürlich durch ein Fahrerverhaltensmodell erweitert werden.

Auf der Basis des angewandten Verhaltensmodells wird für den Fußgänger 2 ausgehend von dessen aktueller Position und dessen aktuellen Bewegungszustand für den ersten Vorhersagezeitraum $\Delta t$ die zugehörige Teiltrajektorie bestimmt, für die darauffolgenden Vorhersagezeiträume $\Delta t$'s wird jedoch der weitere inkrementelle Bewegungsablauf mittels eines Zufallsgenerators "ausgewürfelt", wobei jedoch nur die Bewegungen betrachtet werden, die das Verhaltensmodell zulassen und unter weiterer Berücksichtigung einer dem Verhaltensmodell zugrundeliegenden Wahrscheinlichkeitsverteilung. Hierzu können beispielsweise Bewegungsabläufe bzw. Verhaltensmuster von Fußgänger über gezielte Einschränkungen der Häufigkeitsverteilungen beim Bestimmen des weiteren Bewegungsablaufs mittels eines Zufallsgenerators berücksichtigt werden.

Diese Verfahren zur Berechnung der fortschreitenden Trajektorien wird so lange fortgesetzt, bis für die beiden Trajektorien eines Trajektorienpaares eine Kollision stattfinden würde bzw. keine Kollision stattfinden kann. Hierzu wird angenommen, dass eine Kollision dann auftreten würde, wenn der Fußgänger 2 sich dem Fahrzeug 1 unter eine vorgegebene Mindestdistanz während der Relativbewegung der beiden Verkehrsteilnehmer angenähert hat.

Die Kollisionswahrscheinlichkeit berechnet sich als Kollisionsrisikowert aus der Anzahl der Trajektorienpaare, die eine Kollision anzeigen würden und der Gesamtanzahl der für den Zeitpunkt $T_0$ berechneten Trajektorienpaare. Nach Fig. 1 wurden 7 Trajektorienpaare ausgehend von einem festen Zeitpunkt $T_0$ bestimmt, wobei der Einfachheit halber für das Fahrzeug 1 nur eine Trajektorie als möglicher Bewegungsverlauf dargestellt wird. Von diesen 7 Trajektorienpaaren zeigt zu einem Zeitpunkt $T_0+\Delta t+...+\Delta t+...$, bei welchem das Fahrzeug den Fußgänger vollständig passiert hat, fünf Trajektorienpaare eine Kollision an, somit ergibt sich ein rechnerischer Kollisionsrisikowert von 5/7.

Dieser Kollisionsrisikowert gilt zunächst für einen vorgegebenen Ausgangszustand nach Figur 1 zum Zeitpunkt $T_0$. Um die Kollisionswahrscheinlichkeit über den zeitlichen Verlauf der sich nach dem Zeitpunkt $T_0$ entwickelnden Szene nach Fig. 1 zu ermitteln, wird die oben erläuterte Berechnung in inkrementellen Zeitschritten $T_1$, $T_2$, $T_3$ ... wiederholt und dabei jeweils von den aktuellen Positionen und den aktuellen Bewegungszuständen des Fahrzeugs 1 und des Fußgängers 2 ausgegangen. Damit erhält man zu jedem dieser Zeitpunkte $T_4$, $T_2$, $T_3$ ... eine hohe Anzahl an möglichen zukünftigen Bewegungsverläufen in Form einer Schar von Trajektorienpaaren, deren Anfang von der aktuellen, tatsächlich gegebenen Verkehrssituation ausgeht. Diese Schar von Trajektorienpaaren ist dann die Basis zur Berechnung des Kollisionsrisikowertes für jeden dieser Zeitpunkte $T_1$, $T_2$, $T_3$ ..., woraus sich eine chronologische Entwicklung der Kollisionsrisikowerte, als der Kollisionswahrscheinlichkeit ergibt.

Dieses erfindungsgemäße Verfahren zur Ermittlung einer Kollisionswahrscheinlichkeit stellt eine realistische und mathematisch fundierte Methode dar, wobei ein deutlich erweiterter Prädiktionshorizont erzielt wird, d. h. eine Vorhersage zeitlich weit vorausschauend, aber dennoch zuverlässig ist.

Dies wird zusätzlich auch dadurch erzielt, dass bei der Ermittlung der Kollisionswahrscheinlichkeit die Bewegungsfähigkeiten der Kollisionspartner berücksichtigt wird, insbesondere die eingeschränkte physiologische Bewegungsfähigkeit eines Lebewesens, insbesondere eines Fußgängers herangezogen wird. In dem Verhaltensmodell eines Fußgängers werden also sowohl die physikalischen Bewegungsmöglichkeiten als auch das physiologische Bewegungsvermögen berücksichtigt.

Insbesondere werden die typischen Bewegungsmuster bzw. solche typischen Bewegungsmuster anzeigende Merkmale eines Fußgängers berücksichtigt, die als Indikatoren charakterisierbar und damit sensorisch erfassbar sind, um daraus mögliche Aufenthaltsorte und schließlich den zukünftig möglichen Aufenthaltsort zu ermitteln.

Bei der Betrachtung des physiologischen Bewegungsvermögens werden verschiedenste Bewegungszustände sowie Kombinationen möglicher Bewegungszustände berücksichtigt.

So wird beispielsweise die maximale Beschleunigung aus dem Stand ohne Drehung, mit einer Drehung um 90° sowie einer Drehung um 180° berücksichtigt. Bei der Berücksichtigung des maximalen Beschleunigungsvermögens aus dem Stand eines Fußgängers wurde beispielsweise herausgefunden, dass das Beschleunigungsvermögen von einem Anfangswert zunächst auf einen Maximalwert zunimmt, um dann mehr oder minder kontinuierlich mit zunehmender Geschwindigkeit des Fußgängers wiederum abzunehmen. Bei einer Drehung um 180° wurde herausgefunden, dass das maximale Beschleunigungsvermögen einerseits stark altersabhängig und andererseits um einen statistischen Mittelwert stark nach oben und unten abweicht. Dabei können jedoch im Vergleich zum Beschleunigungsvermögen aus dem Stand betragsmäßig lediglich geringere Beschleunigungswerte erreicht werden.

In entsprechender Weise wird das maximale Verzögerungsvermögen eines Fußgängers aus vollem Lauf, einmal ohne Wegdrehen und ein anderes Mal mit maximal möglicher Richtungsänderung berücksichtigt. Auch hier wurden starke, altersabhängige Unterschiede festgestellt. Das Verzögerungsvermögen aus vollem Lauf ohne Richtungsänderung ist betragsmäßig größer als das maximale Beschleunigungsvermögen des Fußgängers.

Ein weiterer, den möglichen Aufenthaltsort beeinflussender Parameter ist die maximale Beschleunigung aus einer Gehgeschwindigkeit heraus. Dabei werden folgende typische Fälle berücksichtigt: eine Drehung um 90° nach links sowie rechts sowie eine Drehung um 45° nach links und rechts. Hierbei wurden minimal mögliche Kurvenradien des Fußgängers ermittelt. Dabei wurde herausgefunden, dass ein minimaler Kurvenradius durch Fußgänger, gleich welchen Alters, nicht unterschritten werden konnte. Diese Information ist wertvoll, um abschätzen zu können, an welchem Ort und gegebenenfalls in welcher Zeit sich ein Fußgänger in Richtung einer Fahrbahn drehen und bewegen kann, auf welchem sich ein Fahrzeug nähert.

In entsprechender Weise wurden Kurvenradien eines Fußgängers aus vollem Lauf nach links und rechts ermittelt.

Zur Abschätzung des physiologischen Bewegungsvermögens wurden ferner ein Sprung nach vorne sowie ein seitlicher Sprung berücksichtigt. Die hierbei erreichbaren Zeiten sowie Distanzen können hilfreich dazu verwendet werden, wie insbesondere ein Fußgänger in einer plötzlich auftretenden Gefahrensituation reagieren kann.

Fig. 2 zeigt ein Diagramm, in welchem das Beschleunigungs- bzw. Verzögerungsvermögen eines Fußgängers in Abhängigkeit von seiner zurückgelegten Geschwindigkeit dargestellt ist. Der Begriff der bisherigen Bewegungsrichtung/Ausrichtung bedeutet dabei, dass von einem Fußgänger ausgegangen wird, welches sich in der Ausrichtung seines Körpers, also insbesondere Rumpfes fortbewegt, wobei bei einem stehenden Fußgänger ja keine Bewegungsrichtung, aber eben eine entsprechende Körperausrichtung vorhanden ist.

In Quadrant Q1 ist das positive Beschleunigungsvermögen in bisherige Bewegungsrichtung/Ausrichtung dargestellt. In Quadrant Q2 ist das negative Beschleunigungsvermögen, also die Abbremsfähigkeit bei Vorwärtsbewegung dargestellt, während Quadranten Q3 und Q4 von einer vorliegenden Bewegung rückwärts zur Ausrichtung ausgehen und somit Q3 das für diese Bewegungsrichtung negative Beschleunigungsvermögen, also Abbremsen und ggfs. wieder in Normalrichtung beschleunigen beschreibt, während Q4 das Beschleunigungsvermögen im Rückwärtsgang zeigt.

Zunächst ist in Fig. 2 als ganz entscheidender Unterschied zu herkömmlichen Trajektoriealgorithmen festzuhalten, dass auch einem stehenden Fußgänger ein definiertes Beschleunigungsvermögen sowohl in als auch entgegen der Ausrichtung zugeordnet wird.

Wie aus dem Diagramm ohne Weiteres zu erkennen ist, ist das maximale Beschleunigungsvermögen $a_{max}$ und das maximale Verzögerungsvermögen $-a_{max}$ nicht bei in etwa einer gleichen Geschwindigkeit v ausgeprägt, sondern nimmt das Beschleunigungsvermögen mit zunehmender Geschwindigkeit frühzeitig ab, während auch bei höheren Geschwindigkeiten noch ein deutlich höheres Verzögerungsvermögen festzustellen ist. Betragsmäßig ist hierbei das Verzögerungsvermögen eines Fußgängers größer als sein Beschleunigungsvermögen.

Zudem wird erstmalig ein Bewegungsvermögen entgegengesetzt zur Ausrichtung berücksichtigt, wenngleich zwar auch Fahrzeuge rückwärts fahren könnten, dies in der Trajektorie jedoch ggf. noch berücksichtigt werden kann. Berücksichtigt man das physiologische Bewegungsvermögen jedoch entsprechend, so ist schon aus Fig. 2 zu erkennen, dass eben das Beschleunigungsvermögen wie auch die Maximalgeschwindigkeit entgegen der Ausrichtung deutlich von denen bei normalen Vorwärtsbewegung abweichen.

Gibt man einem Algorithmus beispielsweise folgende Parameter für den Fußgänger vor:

- eine Maximalgeschwindigkeit, ab der das Beschleunigungsvermögen in bisherige Bewegungsrichtung Null wird,
- eine Maximalbeschleunigung sowohl in als auch entgegen der Ausrichtung eines stehenden Fußgängers,
- eine Geschwindigkeit, bei der das maximale Beschleunigungsvermögen in die bisherige Bewegungsrichtung maximal ist,
- eine Geschwindigkeit, bei der das maximale Beschleunigungsvermögen entgegengesetzt zur bisherigen Bewegungsrichtung und/oder Ausrichtung des Fußgängers betragsmäßig maximal ist,
- eine Maximalgeschwindigkeit entgegen der Ausrichtung des Fußgängers, ab der das Beschleunigungsvermögen entgegen der Ausrichtung Null wird,

so kann daraus relativ einfach und hinreichend genau das jeweilige Beschleunigungs- und Verzögerungsvermögen abgeleitet werden.

Diese Werte sind vorzugsweise in Abhängigkeit von der Klasse des Fußgängers, insbesondere Alter, Geschlecht und Körperabmaßen variierend vorgegeben, da hier deutliche Unterschiede festzustellen sind.

Allein die Berücksichtigung dieses Zusammenhangs zwischen Beschleunigung und Geschwindigkeit eines Fußgängers ermöglicht im Vergleich zum Stand der Technik wesentlich präzisere Vorhersagen eines möglichen Aufenthaltsorts und damit die Ermittlung einer Kollisionswahrscheinlichkeit.

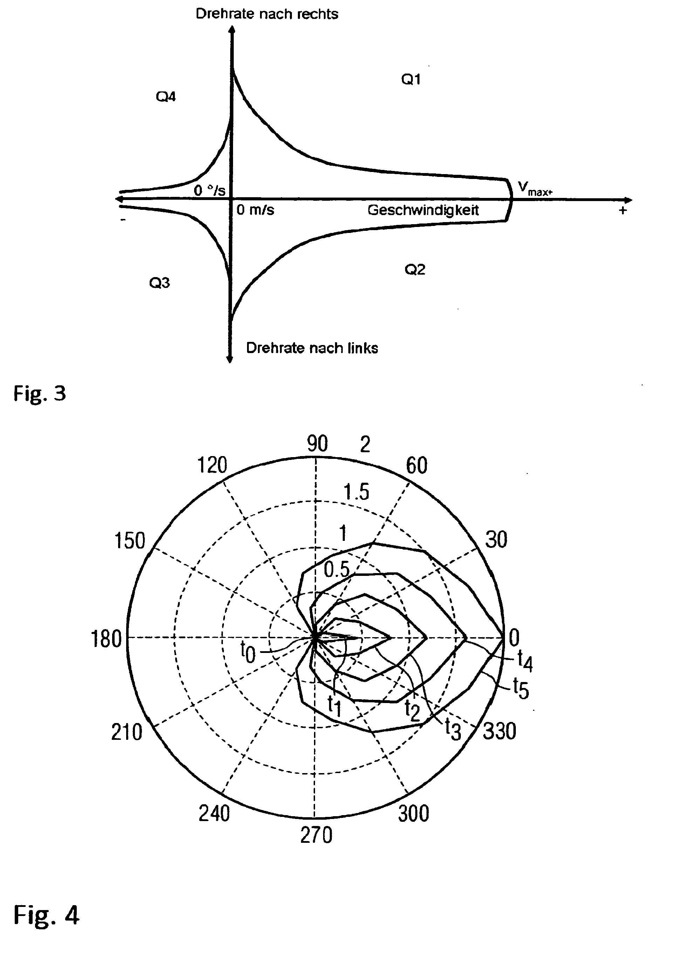

Fig. 3 zeigt analog das Rotationsvermögen um die eigene Achse, wobei normalerweise das Rotationsvermögen zu beiden Richtungen symmetrisch ausgebildet ist, in Vorwärtsrichtung aber deutlich höher als im Rückwärtslauf und selbst bei hohen Geschwindigkeiten eine abnehmende, aber recht erstaunliche Drehfähigkeit erhalten bleibt. Damit unterscheidet sich aus dieser Parameter des physiologischen Bewegungsvermögens entscheidet von klassischen Trajektoriealgorithmen, da diese eine Drehung um die eigene Achse, erst recht nicht im Stand kennen.

Das seitliche physiologische Bewegungsvermögen, also quer zur Körperausrichtung und normalen Laufrichtung wird zudem beeinflusst durch das Vermögen zu Seitwärtsschritten. Dieses Vermögen zu Seitwärtsschritten ist im Stand signifikant und führt auch bei geringer Fortbewegungsgeschwindigkeit zu den in den folgenden Figuren 3 und 4 im Vergleich erkennbaren Unterschieden im maximal erreichbaren Aufenthaltsraum, nimmt aber mit zunehmender Laufgeschwindigkeit deutlich ab und kann bei normaler Vorwärtsbewegung notfalls weggelassen und durch ein erhöhtes Drehvermögen ersetzt werden.

Fig. 4 in einem Polardiagramm den Bewegungsspielraum eines stehenden Fußgängers unter Berücksichtigung seines lateralen und rotatorischen Beschleunigungsvermögens unter Auslassung von Seitwärts- und Rückwärtsbewegungen. In dem Polardiagramm sind Winkel von 0° bis 360° eingezeichnet. Ein Winkel von 0° bedeutet hierbei, dass der Fußgänger geradeaus läuft. In dem Polardiagramm sind ferner konzentrische Kreise eingezeichnet, die mit 0,5, 1, 1,5 und 2 gekennzeichnet sind. Hierbei handelt es sich um Entfernungen (z.B. in Metern) relativ zu dem Zentrum, an dem sich der Mensch zum Zeitpunkt $t_0$ befindet. Zu den Zeitpunkten $t_1$, $t_2$, $t_3$, $t_4$, $t_5$, wobei $t_5 > t_4 > t_3 > t_2 > t_1$ ist, kann sich der Mensch jeweils innerhalb der jeweils zugeordneten ISO-Linien aufhalten.

Aufgrund seines physiologischen Bewegungsvermögens kann sich dieser zu einem Zeitpunkt $t_1$ in einem durch die betreffende ISO-Linie umschlossenen Bereich bewegen. Hierbei ist im Wesentlichen eine Bewegung nach vorne (d.h. in Laufrichtung, Winkel 0°) möglich, während eine Abweichung von dem Winkel 0° nach links (im Gegenuhrzeigersinn) oder rechts (im Uhrzeigersinn) kaum möglich ist. Zu einem Zeitpunkt $t_2$ ($t_2 > t_1$) erweitert sich der Bereich nach vorne sowie auch nach rechts und links (vgl. die mit $t_2$ gekennzeichnete ISO-Linie). In entsprechender Weise kann sich der Fußgänger zu einem Zeitpunkt $t_5$ ($t_5 > t_4 > t_3 > t_2 > t_1$) in dem durch die entsprechende ISO-Linie umschlossenen Bereich aufhalten. Hierbei ist nicht nur eine Bewegung nach vorne, sondern auch eine Bewegung seitlich nach hinten möglich.

Bei der Betrachtung des Polardiagramms ergibt sich ohne Weiteres, dass das physiologische Bewegungsvermögen zu den im Vergleich zu $t_0$ in der Zukunft liegenden Zeitpunkten $t_1$ bis $t_5$ eine Bewegung in den Winkelbereich zwischen 120° und 240° nicht zulässt. Diese Erkenntnis ist wichtig, wenn der Fußgänger z.B. mit dem Rücken der Fahrbahn zugewandt ist. Vielmehr erlaubt es der physiologische Bewegungsspielraum lediglich, dass sich der Fußgänger tendenziell geradeaus (Winkel 0°) nach vorne bewegt, wobei kurzfristig lediglich Abweichungen in einem Winkelbereich von weniger als $\pm 90°$ und erst zu einem späteren Zeitpunkt (Zeitpunkt $t_5$) Abweichungen von $\pm 120°$ möglich sind. Hierbei ergibt sich jedoch auch, dass mit zunehmendem Winkel die von dem Fußgänger zurücklegbare Distanz geringer wird. Nicht berücksichtigt ist hierbei in dieser Darstellung, dass ein Fußgänger auch einen Schritt nach hinten (Winkel 180°) machen kann, wobei die dabei zurücklegbare Strecke gering ist.

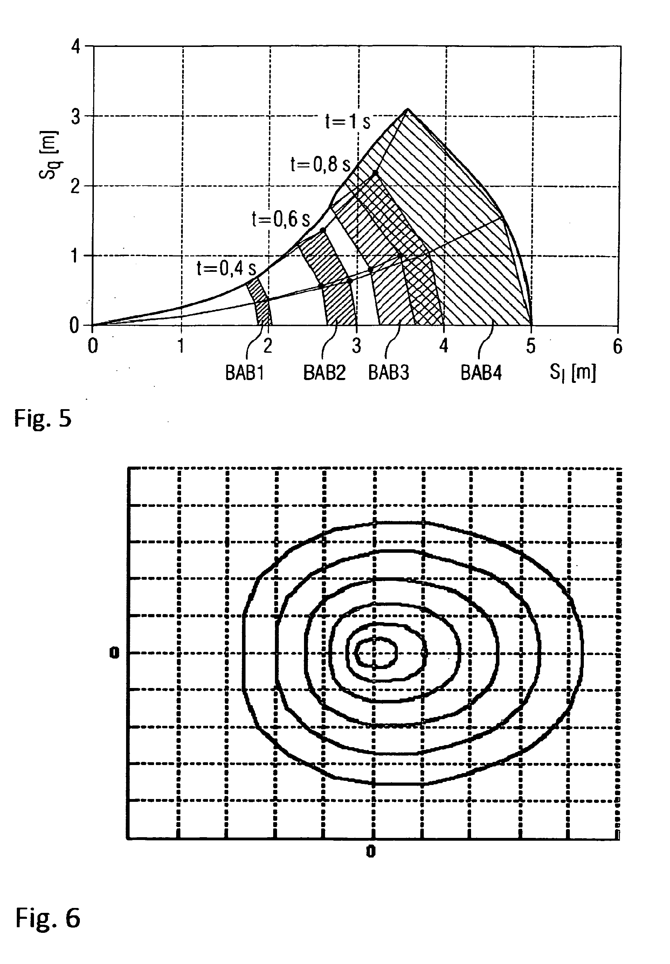

Diese Bewegungsformen seitwärts und rückwärts mit einbezogen, ergibt sich noch mal eine deutliche Änderung des Bewegungs-Aufenthaltsbereichs, wie Fig. 5 zeigt. Es ergibt sich näherungsweise elliptisches Muster, wobei der Schwerpunkt der Ellipse deutlich aus dem Nullpunkt in Richtung der normalen Ausrichtung verschoben ist, da das Bewegungsvermögen in Ausrichtung höher als entgegen der Ausrichtung ist.

Fig. 6 zeigt ein Diagramm, welches den Bewegungsspielraum eines sich mit einer Geschwindigkeit v fortbewegenden Menschen in Längsrichtung $s_1$ und Querrichtung $s_q$ verdeutlicht. Es wird hierbei davon ausgegangen, dass sich der Fußgänger zu einem Zeitpunkt 0 am Koordinatenursprung befindet und sich mit einer vorgegebenen Geschwindigkeit in Längsrichtung (d.h. längs der x-Achse) bewegt. Zu einem Zeitpunkt t = 0,4 s kann sich der Fußgänger nach Berücksichtigung sämtlicher Parameter in dem mit BAB1 gekennzeichneten und schraffierten Bewegungs-Aufenthaltsbereich aufhalten. Zu einem Zeitpunkt t = 0,6 s kann sich der Fußgänger in dem mit BAB2 gekennzeichneten Bereich aufhalten. In entsprechender Weise ist der mögliche Bewegungs-Aufenthaltsbereich BAB3 zum Zeitpunkt t = 0,8 s und BAB4 zum Zeitpunkt t = 1 s eingezeichnet. Hierbei ist gut ersichtlich, dass mit fortschreitender Zeit sich der Bewegungs-Aufenthaltsbereich zum einen zunehmend verbreitert, d.h. in Querrichtung $s_q$ erstreckt, und andererseits eine größere Tiefe aufweist. Dies resultiert daraus, dass die potentiellen Möglichkeiten des Fußgängers hinsichtlich einer Bewegung mit fortschreitender Zeit variabler werden, so dass sich hierdurch bedingt, auch der mögliche Aufenthaltsbereich vergrößert.

In Fig. 6 sind lediglich Bewegungs-Aufenthaltsbereiche BAB1, ..., BAB4 in einer Querrichtung (im Ausführungsbeispiel nach links) dargestellt. Es versteht sich von selbst, dass sich der Bewegungs-Aufenthaltsbereich auch in die andere Querrichtung erstreckt und das in Fig. 6 gezeigte Diagramm deshalb an der x-Achse gespiegelt werden muss.

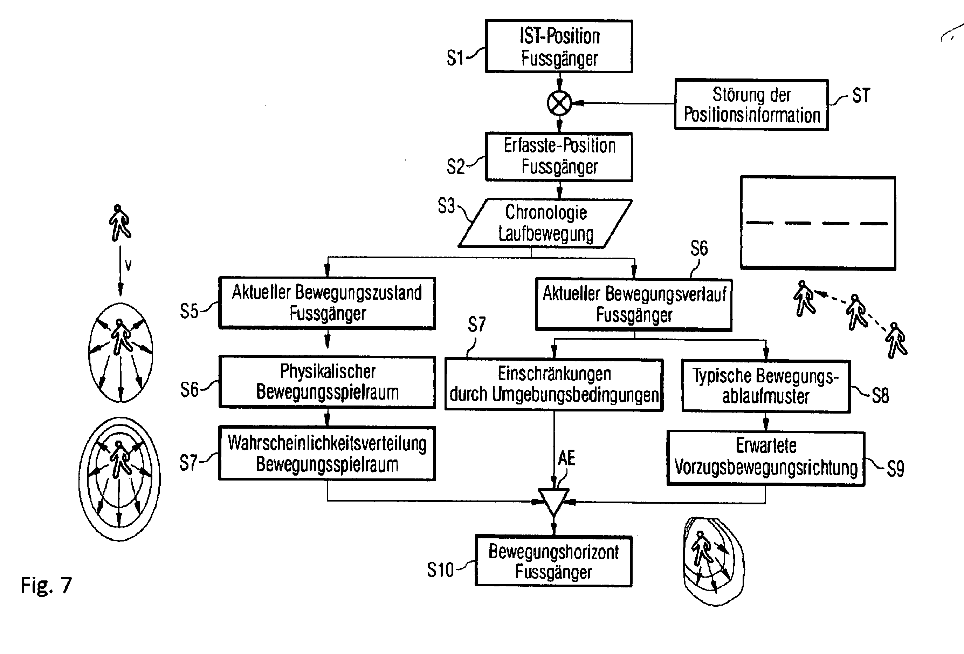

Fig. 7 zeigt ein Ablaufdiagramm, aus dem das Verfahren zur Bestimmung der Trajektorie eines Fußgängers ersichtlich wird. In einem Schritt S1 wird eine IST-Position eines Fußgängers erfasst. Dies kann z.B. durch Bilderfassungsmittel in einem Fahrzeug erfolgen. In einem Schritt S2 wird eine Störung einer Positionsinformation (ST) berücksichtigt, welche z.B. durch Messfehler und dergleichen verursacht sein kann. Aus den in Schritt S2 ermittelten, bereinigten Daten wird in einem Schritt S3 eine Chronologie, d.h. eine Historie der Bewegung des Fußgängers ermittelt. Hierbei ist es z.B. ausreichend, wenn die Historie 0,5 bis 1 s in die Vergangenheit reicht. Aus diesen Informationen kann zum einen eine Bewegungstrajektorie und zum anderen ein Bewegungszustand des Fußgängers ermittelt werden. Die Ermittlung des gegenwärtigen Bewegungszustands des Fußgängers erfolgt in einem Schritt S5. Unter Berücksichtigung des physiologischen Bewegungsvermögens des Fußgängers wird in einem Schritt S6 ein physikalischer Bewegungsspielraum ermittelt. Dieser Bewegungsspielraum entspricht dem zukünftig möglichen Bewegungs-Aufenthaltsbereich, welchen der Fußgänger aufgrund seiner Ausrichtung, Laufgeschwindigkeit, translatorischen und/oder rotatorischen Bewegung, seinem Kurvenradius, seinem Alter, dem Bodenreibwert usw. einnehmen kann. Schließlich wird in einem Schritt S7 eine Wahrscheinlichkeitsverteilung des Bewegungsspielraums bzw. Bewegungs-Aufenthaltsbereichs ermittelt. Hierbei wird der Bewegungs-Aufenthaltsbereich in eine Anzahl an unterschiedlichen Bereichen mit einer jeweiligen Wahrscheinlichkeit des Aufenthalts unterteilt. Das Ergebnis wird einer Auswerteeinheit AE zugeführt. Der aktuelle Bewegungsverlauf des Fußgängers, d.h. dessen Bewegungstrajektorie, wird in einem Schritt S6 ermittelt, welcher parallel zu Schritt S5 ausgeführt werden kann. Der zukünftige Bewegungsverlauf des Fußgängers wird in einem Schritt S7 durch die Berücksichtigung von Einschränkungen durch Umgebungsbedingungen vorher bestimmt und der Auswerteeinheit AE zugeführt. Parallel hierzu können in einem Schritt S8 typische Bewegungsablaufmuster berücksichtigt werden. Hierbei fließt z.B. eine Erkenntnis ein, wie sich ein Fußgänger an einer Ampel oder einem Fußgängerüberweg verhält. Aus diesen Informationen wird versucht, eine erwartete Vorzugsbewegungsrichtung zu bestimmen. Diese Information wird ebenfalls der Auswerteeinheit AE zugeführt, welche in einem Schritt S10 aus den ihr zugeführten Informationen einen Bewegungshorizont des Fußgängers ermittelt. Der Bewegungshorizont entspricht hierbei wiederum dem Bewegungs-Aufenthaltsbereich bzw. dem Aufenthaltsort.

Mit diesem Verfahren wird eine wesentlich genauere Vorhersage der Aufenthaltswahrscheinlichkeit eines Fußgängers oder Radfahrers oder Tiers in der nahen Zukunft, ausgehend von einer über der Zeit gemessenen Position möglich.

Dieses Verfahren wird zusammen mit dem Verfahren zur Ermittlung der Kollisionswahrscheinlichkeit beispielsweise in einem Steuergerät implementiert, berechnet aus Bewegungsmöglichkeiten des Fahrzeugs und des Lebewesens die Kollisionswahrscheinlichkeit als Kollisionsrisikowert, wobei die Prognosequalität durch die Berücksichtigung des physiologischen Bewegungsvermögens des Lebewesens erhöht wird.

Wie aus der vorangegangenen Beschreibung deutlich wurde, kann ein Mensch deutlich schneller verzögern als beschleunigen oder bei größeren Laufgeschwindigkeiten keine Richtungsänderung oder nur Richtungsänderungen mit kleinen Radien vornehmen. Dieses Bewegungsvermögen ist darüber hinaus individuell abhängig von Alter, Geschlecht, Kondition, etc. und wird z.B. vor der Implementierung in einen Algorithmus durch Tests ermittelt. Die Informationen können z.B. in einem Speicher hinterlegt werden und in Abhängigkeit von den ermittelten Eingangsdaten zur präziseren Ermittlung der Aufenthaltswahrscheinlichkeit herangezogen werden.

Darüber hinaus können durch Tests oder Verkehrsbeobachtungen charakteristische Bewegungsablaufmuster von Lebewesen, insbesondere in typischen Verkehrssituationen (z.B. an Fußgängerüberwegen, Ampeln usw.) ermittelt und im Rahmen des Verfahrens berücksichtigt werden. Auch damit wird durch Vergleich der Bewegungsablaufmuster mit der gemessenen bzw. ermittelten Bewegung des Lebewesens die Vorhersagegenauigkeit gesteigert.

Darüber hinaus ist das Einbeziehen von Umgebungsinformationen möglich, wobei diese von Navigationssystemen oder digitalen Karten bereitgestellt werden können. Darüber hinaus ist eine Kombination mit Zustandsbeobachtern (Kombination digitaler Karten in Verbindung mit Umfeldsensorik) möglich. Einschränkungen der Bewegungsmöglichkeiten durch Hindernisse (z.B. in einem Straßenverlauf, Häuserwänden und dergleichen) können berücksichtigt werden, wodurch die Vorhersagegenauigkeit ebenfalls steigt. Diese kann auch bei der Vorhersage des zukünftigen Aufenthalts des Fahrzeugs berücksichtigt werden.

Ein Fahrzeug kann zur Durchführung dieser Verfahren mit einer entsprechenden Sensorik zur Erfassung von Parametern von Lebewesen bzw. Fußgängern, insbesondere den für deren physiologischem Bewegungsvermögen maßgeblichen Parametern ausgestattet werden, wobei eine Recheneinheit zur Ermittlung des zukünftig möglichen Aufenthaltsorts bzw. der fortschreitenden Trajektorienpaare zu dem gegebenen Zeitpunkt ausgehend von einem Ort der Bewegungstrajektorie und dem Bewegungszustand unter Berücksichtigung des physiologischen Bewegungsvermögens des Lebewesens für einen oder mehrere zukünftige Zeitpunkte entsprechend ausgebildet ist. Insbesondere zur Bestimmung der Trajektorien eines Fußgängers können beispielsweise entsprechende Kennlinienfelder und Physiologiemodelle hinterlegt und dann von der Recheneinheit anhand der Parameter der wahrscheinliche Aufenthaltsort bestimmt werden. Damit kann ein Schutzsystem für Lebewesen bzw. Fußgänger außerhalb des Fahrzeugs, insbesondere Fußgängerschutzeinrichtungen deutlich genauer aktiviert und Fehlalarme deutlich reduziert werden.

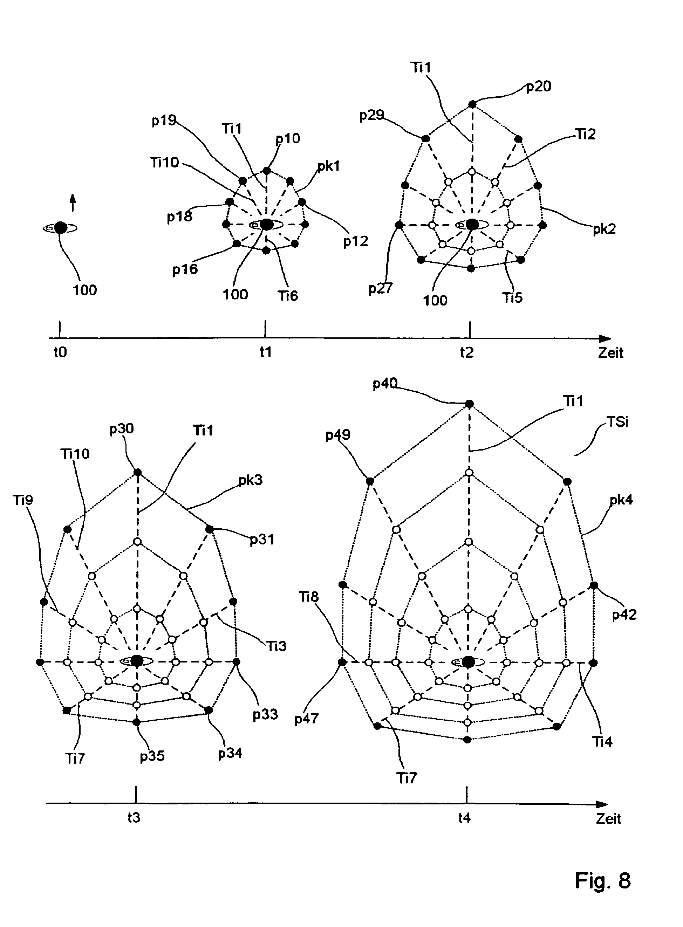

Trajektorien-Scharen für eine endliche Anzahl an typischen Bewegungsausgangssituationen für verschiedenen Fußgängertypen werden wie in der Figur 8 dargestellt während der Initialphase, bevor das Fahrzeug in Betrieb genommen wird, vorab ermittelt und im am Bord des Fahrzeugs befindlichen Speicher abgespeichert.

Die Trajektorien-Scharen werden vorzugsweise für jeden Typ von Fußgängern für alle möglichen Bewegungsausgangssituationen einmal ermittelt und dem jeweiligen Fußgängertyp und der jeweiligen Bewegungsausgangssituation zugeordnet abgespeichert.

Eine Trajektorien-Schar für die Fußgänger 100 der Gruppe "Erwachsene Männer" und die Bewegungsausgangssituation BSi(vi, ai, wi) wird wie folgt ermittelt. Dabei bedeuten vi, ai bzw. wi jeweils die Ausgangsgeschwindigkeit, Ausgangsbeschleunigung sowie Ausgangsdrehrate des erwachsenen Mustermannes 100.

Ausgehend von dieser Bewegungsausgangssituation BSi(vi, ai, wi) werden alle möglichen typischen Bewegungstrajektorien ti1, ..., ti10 des Musterfußgängers 100 für einen bevorzugten Zeitraum von 3s in inkrementellen Zeitschritten von Δt=0.1s ermittelt. In der Figur 8 sind zur vereinfachten Darstellung des erfindungsgemäßen Verfahrens lediglich 10 Trajektorien für die Trajektorien-Schar symbolisch dargestellt.

Zum ersten Messzeitpunkt t1, wobei t1=Δt=0.1s ist, werden bspw. 10 Aufenthaltspunkte bzw. Aufenthaltspositionen p10, ..., p19 mit entsprechenden Trajektorien Ti1, ..., Ti9 ermittelt. Da der Fußgänger 100 wie oben in der Beschreibung dargestellt, seine Laufrichtung abrupt ändern und somit in allen Richtungen laufen kann, liegen die Aufenthaltspunkte teilweise hinter dem Fußgänger 100, in entgegen gesetzter Richtung der aktuellen Ausrichtung des Fußgängers 100 bei der Bewegungsausgangssituation (die Pfeilsrichtung). Die Aufenthaltspunkte p10, ..., p19 bilden gemeinsam einen Kreis pkl, der nachfolgend Aufenthaltskreis bezeichnet wird. Jeder Punkt in diesem Aufenthaltskreis ist im Grunde genommen ein möglicher Aufenthaltspunkt des Fußgängers 100 zum Zeitpunkt t1. Da der Fußgänger 100 gewisse Masse und Form wie z. B. Breite, Tiefe besitzt, werden die Aufenthaltspunkte, die zueinander nahe liegen, gruppiert und durch einige wenigen Aufenthaltspunkte p10, ..., p19 wie in Figur 8 dargestellt. Die diesen Aufenthaltspunkten p10, ..., p19 zugehörigen Trajektorien Ti1, ..., Ti10 bilden gemeinsam eine Trajektorien-Schar für diesen Typ von Fußgängern 100 und für deren Bewegungsausgangssituation BSi(vi, ai, wi). Die Anzahl der Trajektorien in dieser Trajektorien-Schar beträgt 10.

Zu weiterfolgenden Zeitpunkten t2=2*Δt=0.2s, t3, t4 werden weitere Aufenthaltspunkte p20, ..., p29; p30, ..., p39; p40, ..., p49 für die bereits erfassten Trajektorien Ti1, ..., Ti10 ermittelt.

Zur vereinfachten Darstellung des erfindungsgemäßen Verfahrens werden hier die Trajektorien nur für einen Zeitraum von 0.4s in Betracht genommen. Je nach Ausführungen wird jedoch ein Zeitraum von ca. 3s oder mehr in Betracht genommen.

Die so ermittelte Trajektorien-Schar TSi mit 10 Trajektorien Ti1, ..., Ti10 mit Aufenthaltspunkten p10, ..., p19; p20, ..., p29; p30, ..., p39; p40, ..., p49 wird samt den Parametern der Bewegungsausgangssituation BSi(vi, ai, wi) der Fußgängergruppe "Erwachsene Männer" zugeordnet in einem Speicher im Fahrzeug 200 für späteren Gebrauch abgespeichert.

Es werden weitere Bewegungsausgangssituationen für andere Gruppen von Fußgängern wie erwachsene Frauen, alte Fußgänger, Kinder, Radfahrer oder Tiere wie Hunde erstellt und entsprechende Bewegungstrajektorien-Scharen ermittelt und im Fahrzeug 200 abgespeichert.

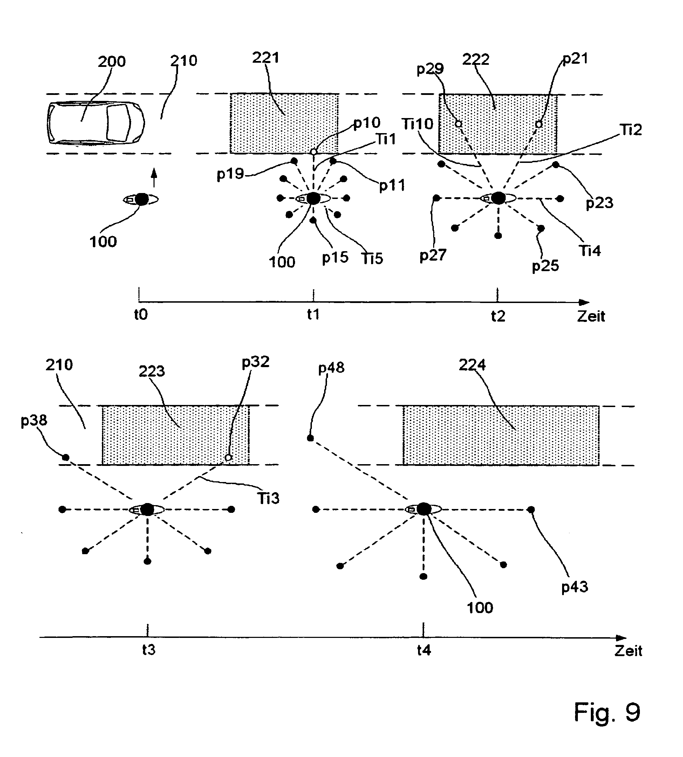

Beim Betrieb des Fahrzeugs 200, bzw. beim Fahren durch eine Innenstadt werden zuerst die Fußgänger 100 in der Fahrzeugumgebung, insb. im Bereich bzw. in der Nähe des Fahrbahnschlauchs 210 des Fahrzeugs 200 mittels der am Bord des Fahrzeugs 200 befindlichen Umfeldsensorik erfasst, wie es die Figur 9 darstellt.

Weiterhin werden die Bewegungszustände der aktuell erfassten Fußgänger 100 mithilfe von geeigneten Sensoren bspw. in Form von Geschwindigkeits-, Beschleunigungs- und Drehratenwerten v0, a0, w0 erfasst. Diese Bewegungszustände dienen als Bewegungsausgangssituationen BSO(v0, a0, w0) zur Ermittlung vom Kollisionsrisiko zwischen dem Fahrzeug 200 und Fußgänger 100 verwendet.

Zum gleichen Zeitpunkt wird die Eigendynamik, nämlich die Geschwindigkeit, Beschleunigung und/oder Drehrate des Fahrzeugs 200 ebenfalls erfasst. Die Fahrzeugbewegung wird basierend auf die gemessenen Eigendynamikwerte des Fahrzeugs 200 in kleinen Zeitschritten extrapoliert und so wird ein Fahrbahnschlauch 210 gebildet, wobei dieser Fahrbahnschlauch Bereiche 221, 222, 223, 224 zu jeweiligen Zeitschritten Δt bzw. Zeitpunkten t1, t2, t3, t4 aufweist. Diese Bereiche 221, 222, 223, 224 sind die Kollisionszonen zu jeweiligen Zeitschritten. Die Zeitschritte Δt entsprechen den Zeitschritten bei der Berechnung der Trajektorien-Schar des Fußgängers während der Initialphase in Figur 8.

Wird ein Fußgänger 100 am Rand des Fahrschlauchs 210 erfasst, so werden die Bewegungszustandswerte v0, a0, w0 des Fußgängers 100, welche von der am Bord des Fahrzeugs 200 befindlichen Umfeldsensorik unmittelbar gemessen wurden oder von einem von dem Fußgänger 100 bei sich getragenen Inertialsensor gemessen und an das Fahrzeug 200 übermittelt wurden, mit den während der Initialphase gemessen und abgespeicherten typischen Bewegungsausgangssituationenwerten BS1(v1, a1, w1), Px-BS2(v2, a2, w2), ..., BSi(vi, ai, w1), ..., BSn(vn, an, wn) verglichen.

Optional wird vor dem Vergleichen der Bewegungszustandswerte der Art des Fußgängers 100, nämlich zu welcher Fußgängergruppe dieser Fußgänger 100 zugeordnet werden soll, anhand der diesem Fußgänger 100 zugehörigen Messdaten der Umfeldsensorik oder des Inertialsensors bestimmt. Weisen die Messdaten der Umfeldsensorik oder des Inertialsensors für einen erwachsenen männlichen Fußgänger charakteristische Merkmale auf, so wird der Fußgänger 100 der Gruppe "Erwachsene Männer" zugeordnet.

Wird der neu erfasste Fußgänger 100 der Gruppe "Erwachsene Männer" zugeordnet, so werden nur die Bewegungsausgangssituationenwerte BS1 (v1, a1, w1) , BS2(v2, a2, w2), ..., BSi(vi, ai, wi), ..., BSn(vn, an, wn), die der Gruppe "Erwachsene Männer" zugeordnet abgespeichert wurden, abgelesen und zum Vergleichen mit den Bewegungszustandswerten v0, a0, w0 herangezogen.

Weisen die Bewegungszustandswerte v0, a0, w0 des Fußgängers 100 die meisten Ähnlichkeiten mit einem Satz von Bewegungsausgangssituationenwerten bspw. BSi(vi, ai, wi) auf, so wird die Bewegungstrajektorien-Schar TSi, welche diesem Satz von Bewegungsausgangssituationenwerten BSi(vi, ai, wi) zugeordnet abgespeichert wurden, zur Kollisionsermittlung herangezogen.

Diese ausgewählte Bewegungstrajektorien-Schar TSi zu diesen Bewegungsausgangssituationenwerten BSi (vi, ai, wi) wird in passender Ausrichtung, wobei diese Ausrichtung vorzugsweise die Ausrichtung des Fußgängers 100 bzgl. der Himmelsrichtung ist (die Pfeilsrichtung in der Figur 9), um die detektierte Position des Fußgängers 100 platziert, wobei der Ausgangspunkt der Bewegungstrajektorien-Schar TSi sich mit dem Mittelpunkt des Fußgängers 100 überlappt.

Zu jedem oben genannten Zeitschritt ∆t=0.1s bzw. zu jeden Zeitpunkten t1, t2, t3, t4 in dem Betrachtungszeitintervall von 0.4s werden die Aufenthaltspunkte p10, ..., p19; p20, ..., p29; p30, ..., p39; p40, ..., p49 der Trajektorien Ti1, ..., Ti10 der ausgewählten Trajektorien-Schar TSi zur Kollisionsrisikoermittlung herangezogen, wobei die Aufenthaltspunkte zu den jeweiligen Zeitpunkten t1, t2, t3, t4 die möglichen Aufenthaltspunkte p10, ..., p19; p20, ..., p29; p30, ..., p39; p40, ..., p49 des Fußgängers 100 zu den jeweiligen Zeitpunkten t1, t2, t3, t4 wiedergeben.

Dann wird überprüft, wie viele dieser Aufenthaltspunkte p10, ..., p19; p20, ..., p29; p30, ..., p39; p40, ..., p49 in der jeweiligen Kollisionszone 221, 222, 223, 224 des Fahrzeugs 200 liegen. Die Aufenthaltspunkte, die in der Kollisionszone 221, 222, 223, 224 liegen, deuten jeweils auf eine Einzelkollision zwischen dem Fahrzeug 200 und dem Fußgänger 100 hin. In der Figur 9 sind diese die Aufenthaltspunkte p10 zum Zeitpunkt t1, p21, p29 zum Zeitpunkt t2, p23 zum Zeitpunkt t3.

Die Anzahl der Trajektorien Ti1, Ti2, T3, Ti10 von der Trajektorien-Schar mit den Aufenthaltspunkten, welche eine Einzelkollision voraussagen, wird bestimmt. In diesem Ausführungsbeispiel beträgt diese Zahl 4. Die Trajektorien Ti1, Ti2, T3, Ti10 mit den Kollisionsaufenthaltspunkten werden bei den nachfolgenden Berechnungsschritten in den folgenden Zeitschritten nicht mehr berücksichtigt. So wird bspw. die Trajektorie Ti1 mit dem Aufenthaltspunkt p10, der zum Zeitpunkt t1 in die Kollisionszone 221 einfällt, bei nachfolgenden Betrachtungszeitpunkten t2, t3, t4 nicht weiter berücksichtigt. Ebenso werden die Trajektorien Ti2, Ti10, deren Aufenthaltspunkte p21, p29 zum Betrachtungszeitpunkt t2 in die Kollisionszone 222 einfallen, bei nachfolgenden Betrachtungszeitpunkten t3, t4 nicht weiter berücksichtigt.

Die Bestimmung der in der Kollisionszone liegenden Aufenthaltspunkte sowie der Anzahl der Trajektorien mit diesen Aufenthaltspunkten wird in inkrementellen Zeitschritten von ∆t solange wiederholt, bis das Fahrzeug 200 den Fußgänger 100 soweit passiert hat, so dass keine Kollisionen mehr auftreten können.

Anschließend wird die Anzahl aller (Kollisions-)Trajektorien mit zumindest einem in den Kollisionszonen liegenden Aufenthaltspunkt ermittelt und der Quotient zwischen der Zahl der Kollisions-Trajektorien und der Gesamtanzahl der Trajektorien gebildet. Dieser Quotient gibt Auskünfte darüber, wie hoch die Kollisionswahrscheinlichkeit ist. Aus diesem Quotient lässt sich so die das Kollisionsrisiko bestimmen.

In diesem Ausführungsbeispiel gemäß der Figur 9 beträgt dieser Quotient:

$$Q = \frac{\text{Anzahl der Kollisions - Trajektorien}}{\text{Anzahl der Trajektorien}} = \frac{4(Ti1, Ti2, Ti3, Ti10)}{10(Ti1, ..., Ti10)} = 0.4 = 40\%$$

Vorteilhafterweise wird der Quotient mit eine Anzahl von vorab definierten Schwellen verglichen. Unterliegt der Quotient eine erste Schwelle mit niedrigstem Schwellwert, so liegt keine Kollisionsgefahr. Übersteigt der Quotient die erste Schwelle aber unterliegt weiterhin eine zweite Schwelle mit zweitniedrigstem Schwellwert, so liegt eine geringe Kollisionsgefahr. Diese geringe Kollisionsgefahr kann bspw. durch Alarmsignal an den Fahrer des Fahrzeugs behoben werden. Übersteigt der Quotient jedoch eine letzte Schwelle mit höchstem Schwellwert, so liegt eine akute Kollisionsgefahr zwischen dem Fahrzeug und Fußgänger. In diesem Fall ist bspw. Maßnahme zur Minderung der Unfallfolgen durch ein autonomes Vollbremsen des Fahrzeugs notwendig.

In diesem Ausführungsbeispiel beträgt der Quotient einen Wert von 0.4, welcher bspw. auf eine relativ hohe Kollisionsgefahr hindeutet. In diesem Fall, sendet das Fahrzeug ein akustisches Signal an den Fahrer und optional auch an den Fußgänger und macht den Fahrer und Fußgänger von einer drohenden Kollisionsgefahr aufmerksam.

**Patentansprüche**

1. Verfahren zur Ermittlung einer Kollisionswahrscheinlichkeit eines Fahrzeugs (1) mit einem Lebewesen (2), bei dem das raumzeitliche Verhalten des Lebewesens (2) mit einem Verhaltensmodell und das raumzeitliche Verhalten des Fahrzeugs (1) mit einem kinematischen Modell modelliert wird und beginnend mit den aktuellen Positionen des Fahrzeugs (1) und des Lebewesens (2) jeweils wenigstens eine Trajektorie (4) bestimmt wird,
**dadurch gekennzeichnet, dass**

b) ausgehend von den aktuellen Positionen des Lebewesens (2) und des Fahrzeugs (1) eine Trajektorie (3, 4) des Fahrzeugs (1) aus dem kinematischen Modell und des Lebewesens (2) aus dem Verhaltensmodell als Trajektorienpaar so lange berechnet werden, bis das Fahrzeug (1) das Lebewesen (2) soweit passiert hat, so dass keine Kollisionen mehr auftreten können.

c) die Anzahl der Trajektorienpaare, die eine Kollision anzeigen, ermittelt wird, und

d) die Kollisionswahrscheinlichkeit als Quotient aus der Anzahl der Trajektorienpaare, die eine Kollision anzeigen und der gesamten Anzahl der berechneten Trajektorienpaare ermittelt wird.

2. Verfahren nach Anspruch 1,
**dadurch gekennzeichnet, dass**
eine Kollision dann angezeigt wird, wenn der von den Trajektorien (3, 4) eines Trajektorienpaares angezeigte Abstand zwischen dem Fahrzeug (1) und dem Lebewesen (2) eine vorgegebene Schwelle unterschreitet.

3. Verfahren nach Anspruch 1 oder 2,
**dadurch gekennzeichnet, dass**
zu inkrementellen Zeitschritten $(T_1, T_2, T_3, ...)$ die Verfahrensschritte b) bis d) wiederholt werden.

4. Verfahren nach einem der vorhergehenden Ansprüche,
**dadurch gekennzeichnet, dass**
mittels des Verhaltensmodells für einen oder für mehrere Zeitpunkte mögliche Aufenthaltsorte des Lebewesens (2) unter Berücksichtigung des Bewegungszustands zum Zeitpunkt des Beginns der Berechnung eines Trajektorienpaares bestimmt werden.

5. Verfahren nach einem der vorhergehenden Ansprüche,
**dadurch gekennzeichnet, dass**
das Verhaltensmodell das physikalische und physiologische Bewegungsvermögen des Lebewesens (2)und/oder empirisch ermittelte Verhaltensmuster des Lebewesens (2) berücksichtigt.

6. Verfahren nach Anspruch 4 und 5,
**dadurch gekennzeichnet, dass**
als Parameter für die Ermittlung des Bewegungszustands und/oder des zukünftig möglichen Aufenthaltsortes einer oder mehrere der folgenden Parameter ermittelt und verarbeitet werden:

- eine rotatorische Geschwindigkeit des Lebewesens (2),
- eine rotatorische Beschleunigung um eine Hochachse des Lebewesens (2),
- ein vorliegender Krümmungsradius der Bewegung des Lebewesens (2),
- eine Änderung in einer Bewegungsrichtung oder eines Krümmungsradius der Bewegung des Lebewesens (2),
- eine Massenträgheit des Lebewesens (2),
- ein insbesondere Witterungsabhängiger Bodenreibwert des Untergrunds,
- eine Klasse des Lebewesens (2), insbesondere ein Alter, ein vorgegebenes Körperabmaß (bspw. Höhe, Bein- oder Schrittlänge), ein Geschlecht oder eine Gattung (bspw. Mensch/Tier/Kind/Fahrradfahrer),
- ein Bewegungsvermögen durch einen oder mehrere Seitwärtsschritte,
- ein Bewegungsvermögen durch einen oder mehrere Rückwärtsschritte,
- Bewegungsvermögen durch Schwerpunktbewegung, und
- Bewegungsvermögen durch Körperneigung.

7. Verfahren nach Anspruch 6,
**dadurch gekennzeichnet, dass**
als Parameter für die Ermittlung des Bewegungszustands und/oder des zukünftig möglichen Aufenthaltsortes einer oder mehrere der folgenden Parameter ermittelt und verarbeitet werden:

- eine Position des Lebewesens (2),
- eine Ausrichtung des Lebewesens (2) zur Umgebung,
- eine translatorische Geschwindigkeit des Lebewesens (2),

- eine translatorische Beschleunigung des Lebewesens (2).
- der chronologische Verlauf wenigstens einer der genannten Parameter.

**8.** Verfahren nach Anspruch 6 oder 7,
**dadurch gekennzeichnet, dass**
aus einer Datenbank oder einem Kennlinienfeld oder einem analytischen Modell ein dem oder den ermittelten Parametern oder dem chronologischen Verlauf wenigstens einer der ermittelten Parameter zugeordneter möglicher zukünftiger Aufenthaltsort des Lebewesens (2) ausgelesen oder ermittelt wird.

**9.** Verfahren nach Anspruch 6 oder 7,
**dadurch gekennzeichnet, dass**
einer oder mehrere der Parameter einem Modellrechner zugeführt werden zur Ermittlung eines möglichen Aufenthaltsortes des Lebewesens (2), wobei dem Modellrechner ein abstrahiertes Bewegungsmodell für Lebewesen (2) zugrunde gelegt ist.

**10.** Verfahren nach einem der Ansprüche 5 bis 9,
**dadurch gekennzeichnet,**
**dass** zur Ermittlung des zukünftig möglichen Aufenthaltsorts ein Bewegungsverlauf in Abhängigkeit der aktuellen Geschwindigkeit, der aktuellen Ausrichtung und der aktuellen Körperrotation berücksichtigt wird.

**11.** Verfahren nach einem der Ansprüche 5 bis 10,
**dadurch gekennzeichnet, dass**
zur Ermittlung des zukünftig möglichen Aufenthaltsorts das maximale Beschleunigungsvermögen des Lebewesens (2) in Abhängigkeit seiner Bewegungsgeschwindigkeit berücksichtigt wird.

**12.** Verfahren nach einem der Ansprüche 4 bis 11,
**dadurch gekennzeichnet, dass**
zur Ermittlung des zukünftig möglichen Aufenthaltsorts ein minimal durchlaufbarer Kurvenradius in Abhängigkeit der vorliegenden Laufgeschwindigkeit und/oder -beschleunigung berücksichtigt wird.

**13.** Verfahren nach einem der Ansprüche 5 bis 12,
**dadurch gekennzeichnet, dass**
zur Ermittlung des zukünftig möglichen Aufenthaltsorts ein maximales Verzögerungsvermögen in Abhängigkeit der Bewegungsgeschwindigkeit und/oder einem Kurvenradius der Bewegung des Lebewesens (2) berücksichtigt wird.

**14.** Verfahren nach einem der Ansprüche 5 bis 13,
**dadurch gekennzeichnet, dass**
zur Ermittlung des zukünftig möglichen Aufenthaltsorts ein Winkel berücksichtigt wird, in dem das Lebewesen (2) zu einem ermittelten Fahrverlauf des Fahrzeugs (1) steht oder sich zu diesem bewegt, wobei in Abhängigkeit des Winkels ermittelt wird, in welcher Zeit das Lebewesen (2) sich in Richtung des Fahrverlaufs drehen und im Wesentlichen gleichzeitig beschleunigen kann, um in den Bereich des Fahrverlaufs zu gelangen.

**15.** Verfahren nach Anspruch 14,
**dadurch gekennzeichnet, dass**
als Winkel ein Winkel zwischen 150° und 210° und damit ein mit dem Rücken zu dem Fahrverlauf stehendes oder sich bewegendes Lebewesen (2) berücksichtigt wird.

**16.** Verfahren nach Anspruch 14,
**dadurch gekennzeichnet, dass**
als Winkel ein Winkel zwischen 60° und 120° und damit ein seitlich zu dem Fahrverlauf stehendes oder sich bewegendes Lebewesen (2) berücksichtigt wird.

**17.** Verfahren nach einem der Ansprüche 5 bis 16,
**dadurch gekennzeichnet, dass**
zur Ermittlung des zukünftig möglichen Aufenthaltsorts eine Relativposition des Lebewesens (2) zu einem Fahrverlauf, insbesondere ein Abstand, berücksichtigt wird, in dem das Lebewesen (2) zu dem Fahrverlauf steht oder sich zu diesem bewegt, wobei in Abhängigkeit der Relativposition ermittelt wird, in welcher Zeit das Lebewesen (2) beschleunigen kann, um in den Bereich des Fahrverlaufs zu gelangen.

**18.** Verfahren nach einem der Ansprüche 5 bis 17,
**dadurch gekennzeichnet, dass**
zur Ermittlung des zukünftig möglichen Aufenthaltsorts Umgebungsinformationen und/oder Hindernisse berücksichtigt werden.

**19.** Verfahren nach Anspruch 11,
**dadurch gekennzeichnet, dass**
in Abhängigkeit der Bewegungsgeschwindigkeit des Lebewesens (2) neben einem maximalen Beschleunigungsvermögen in die bisherige Bewegungsrichtung auch ein maximales Beschleunigungsvermögen entgegengesetzt zur bisherigen Bewegungsrichtung und/oder Ausrichtung des Lebewesens (2) vorgegeben ist.

**20.** Verfahren nach Anspruch 19,
**dadurch gekennzeichnet, dass**
für das Lebewesen (2) zumindest einer der folgenden Parameter vorgegeben sind:

- eine Maximalgeschwindigkeit, ab der das Beschleunigungsvermögen in bisherige Bewegungsrichtung Null wird,
- eine Maximalbeschleunigung sowohl in als auch entgegen der Ausrichtung eines stehenden Lebewesens (2),
- eine Geschwindigkeit, bei der das maximale Beschleunigungsvermögen in die bisherige Bewegungsrichtung maximal ist,
- eine Geschwindigkeit, bei der das maximale Beschleunigungsvermögen entgegengesetzt zur bisherigen Bewegungsrichtung und/oder Ausrichtung des Lebewesens (2) betragsmäßig maximal ist,
- eine Maximalgeschwindigkeit entgegen der Ausrichtung des Lebewesens (2), ab der das Beschleunigungsvermögen entgegen der Ausrichtung Null wird,

wobei diese Werte vorzugsweise in Abhängigkeit von der Klasse des Lebewesens (2), insbesondere Alter, Geschlecht und Körperabmaßen variierend vorgegeben sind.

**21.** Verfahren nach einem der vorangehenden Ansprüche, wobei bevor das Fahrzeug (200) in Betrieb genommen wird, eine endliche Anzahl an typischen Bewegungsausgangssituationen (BSi(vi, ai, wi)) für verschiedenen Fußgängertypen (100) gemessen und in einem am Bord des Fahrzeugs (200) befindlichen Speicher abgespeichert wird.

**22.** Verfahren nach Anspruch 21, wobei für jede dieser Bewegungsausgangssituationen (BSi(vi, ai, wi)) eine Schar (TSi) möglicher Bewegungstrajektarien (Ti1, Ti2, ..., Ti10) für einen vorgegebenen bestimmten Zeitraum mit inkrementellen Schritten ($\Delta$t) berechnet wird.

**23.** Verfahren nach Anspruch 22, wobei die Bewegungsausgangssituationen (BSi(vi, ai, wi)) mit den berechneten Trajektorien-Scharen (TSi) auf dem Speicher am Bord des Fahrzeugs hinterlegt werden.

**24.** Verfahren nach Anspruch 23, wobei die Kollisionsrisikoberechnung während des Betriebs des Fahrzeugs dann wie folgt erfolgt wird:

- Durch ein geeignetes Sensorsystem der Bewegungszustand des Fußgängers (100) erfasst wird.
- Die am nächsten liegende Bewegungsausgangssituation (BSi(vi, ai, wi)) des Fußgängers (100), welche vor der Inbetriebnahme des Fahrzeugs (200) gemessen und im Speicher hinterlegt ist, ausgewählt wird.
- Die Trajektorien-Schar (TSi), welche zu dieser ausgewählten Bewegungsausgangssituation (BSi(vi, ai, wi)) vor der Inbetriebnahme des Fahrzeugs (200) berechnet und dieser Bewegungsausgangssituation (BSi(vi, ai, wi)) zugeordnet abgespeichert ist, abgelesen und der Ausrichtung des Fußgängers (100) entsprechend und um die detektierte Position des Fußgängers (100) platziert wird.

**25.** Verfahren nach Anspruch 24, wobei das Kollisionsrisiko wie folgt berechnet:

- Die Fahrzeugbewegung in kleinen Zeitschritten extrapoliert und eine Fahrbahnschlauch (210) gebildet wird, wobei dieser Fahrbahnschlauch (210) Kollisionszone (221, 222, 223, 224) zu jeweiligen Zeitschritten (t1, t2, t3, t4) aufweist.
- Zu jedem Zeitschritt (t1, t2, t3, t4) nur die Aufenthaltspunkte (p10, ..., p19; p20, ..., p29; p30, ..., p39; p40, ..., p49) der Trajektorien (Ti1, Ti2, ..., Ti10) der ausgewählten Trajektorien-Schar (TSi) betrachtet werden, wobei die Aufenthaltspunkte (p10, ..., p19; p20, ..., p29; p30, ..., p39; p40, ..., p49) zu dem jeweiligen Zeitschritt (t1, t2, t3, t4) die möglichen Aufenthaltspositionen des Fußgängers (100) zu diesem Zeitschritt (t1, t2, t3, t4) wiedergeben.
- Dann überprüft wird, ob diese ausgewählten Aufenthaltspunkte (p10, ..., p19; p20, ..., p29; p30, ..., p39; p40, ..., p49) in der Kollisionszone (221, 222, 223, 224) vom Fahrzeug (200) liegen.
- Die Anzahl der Trajektorien (Ti1, Ti2, Ti3, Ti10) in der Trajektorien-Schar (TSi) mit den Aufenthaltspunkten (p10, p21, p29, p32), welche in einer der Kollisionszonen (221, 222, 223, 224) vom Fahrzeug (200) liegen und eine Einzelkollision zwischen dem Fahrzeug (200) und dem Fußgänger (100) voraussagen, bestimmt werden.

26. Verfahren nach Anspruch 25, wobei für die nachfolgenden Berechnungsschritte in den nächsten Zeitschritten (t2, t3, t4) die Trajektorien (Ti1, Ti2, Ti3, Ti10) mit den Aufenthaltspunkten (p10, p21, p29, p32), welche in einer der Kollisionszonen (221, 222, 223, 224) vom Fahrzeug (200) liegen und eine Einzelkollision zwischen dem Fahrzeug (200) und dem Fußgänger (100) voraussagen, herausgenommen werden.

27. Verfahren nach einem der Ansprüche 24 bis 26, wobei die Verfahrensschritte in inkrementellen Zeitschritten (Δt), um auch für die nachfolgenden Zeitschritte (t2, t3, t4) die Anzahl der Trajektorien (Ti1, Ti2, Ti3, Ti10) mit den Aufenthaltspunkten (p10, p21, p29, p32), welche in einer der Kollisionszonen (221, 222, 223, 224) vom Fahrzeug (200) liegen und eine Einzelkollision zwischen dem Fahrzeug (200) und dem Fußgänger (100) voraussagen, festzustellen.

28. Verfahren nach einem der Ansprüche 24 bis 27, wobei die Verfahrensschritte solange durchgeführt werden, bis das Fahrzeug (200) den Fußgänger (100) soweit passiert hat, so dass keine Kollisionen zwischen dem Fahrzeug (200) und dem Fußgänger (100) mehr auftreten können.

29. Verfahren nach Anspruch 28, wobei die Gesamtanzahl der Trajektorien (Ti1, Ti2, Ti3, Ti10) mit zumindest einem Aufenthaltspunkt (p10, p21, p29, p32), welcher in einer der Kollisionszonen (221, 222, 223, 224) vom Fahrzeug (200) liegt, ermittelt wird und der Quotient (Q) zwischen der Gesamtanzahl der Kollisions-Trajektorien (Ti1, Ti2, Ti3, Ti10) und der Gesamtanzahl der Trajektorien (Ti1, ..., Ti10) gebildet wird.

30. Fahrzeug mit einem Schutzsystem für Lebewesen (2) außerhalb des Fahrzeugs (1), insbesondere Fußgängerschutzeinrichtungen

- mit zumindest einer Sensorik, um Umgebungsinformationen zu erfassen,
- mit einer Recheneinheit, welche die Umgebungsinformationen auswertet, um ein Lebewesen, insbesondere einen Fußgänger (2) zu identifizieren, für das Lebewesen (2) und das Fahrzeug (1) jeweils eine Bewegungstrajektorie als Trajektorienpaar ermittelt und daraus ein Kollisionswahrscheinlichkeit und damit die Notwendigkeit zur Auslösung eines Schutzsystems ableitet, wobei
- das Fahrzeug (1) zur Durchführung des Verfahrens nach einem der vorangehenden Ansprüche ausgebildet ist, wobei
- die Sensorik zur Erfassung von Parametern von Lebewesen (2) und deren physiologischem Bewegungsvermögen sowie
- die Recheneinheit zur Ermittlung des zukünftig möglichen Aufenthaltsorts zu dem gegebenen Zeitpunkt ausgehend von einem Ort der Bewegungstrajektorie und dem Bewegungszustand unter Berücksichtigung eines physiologischen Bewegungsvermögens des Lebewesens (2) für einen oder mehrere zukünftige Zeitpunkte ausgebildet sind.

## Claims

1. A method for determining the probability of a collision of a vehicle (1) with a living being (2), wherein the spatiotemporal behaviour of the living being (2) is modelled by means of a behavioural model and the spatiotemporal behaviour of the vehicle (1) is modelled by means of a kinematic model and at least one trajectory (4) is determined for each of them, starting from the current positions of said vehicle (1) and said living being (2), **characterized in that**

b) starting from the current positions of the living being (2) and of the vehicle (1), the kinematic model and the behavioural model are used to compute trajectories (3, 4) of the vehicle (1) and of the living being (2) as a trajectory pair until the vehicle (1) has passed the living being (2) to an extent that collisions can no longer occur, c) the number of trajectory pairs indicating a collision is determined, and

d) the probability of a collision is determined as the quotient of the number of trajectory pairs indicating a collision and the total number of computed trajectory pairs.

2. The method according to claim 1,
   **characterized in that**
   a collision is indicated if the distance between the vehicle (1) and the living being (2) indicated by the trajectories (3, 4) of a trajectory pair is below a predefined threshold.

3. The method according to claim 1 or 2,
   **characterized in that**
   the method steps b) to d) are repeated at time increments ($T_1$, $T_2$, $T_3$, ...).

4. The method according to any one of the preceding claims,
   **characterized in that**
   the behavioural model is used to determine potential positions of the living being (2) for one or several moment(s) in time, taking into account the state of motion at the time when the computation of a trajectory pair starts.

5. The method according to any one of the preceding claims,
   **characterized in that**
   the behavioural model takes into account the physical and physiological movement ability of the living being (2) and/or behavioural patterns of the living being (2) that have been determined empirically.

6. The method according to claims 4 and 5,
   **characterized in that**
   one or several of the following parameters is/are determined and processed as parameters for the determination of the state of motion and/or of the potential future position:

   - a speed of rotation of the living being (2),
   - a rotational acceleration about a vertical axis of the living being (2),
   - a present radius of curvature of the movement of the living being (2),
   - a change in a direction of movement or of a radius of curvature of the movement of the living being (2),
   - an inertia of the living being (2),
   - a ground friction coefficient of the road surface, which in particular depends on the weather,
   - a class of the living being (2), in particular an age, a predefined body dimension (e.g. height, leg length or inside leg length), a gender or a category (e.g. human being/animal/child/cyclist),
   - an ability to move by taking one or several step(s) to the side,
   - an ability to move by taking one or several step(s) back,
   - an ability to move by moving the centre of gravity, and
   - an ability to move by inclining the body.

7. The method according to claim 6,
   **characterized in that**
   one or several of the following parameters is/are determined and processed as parameters for the determination of the state of motion and/or of the potential future position:

   - a position of the living being (2),
   - an orientation of the living being (2) relative to the surroundings,
   - a translational speed of the living being (2),
   - a translational acceleration of the living being (2),
   - the chronological development of at least one of said parameters.

8. The method according to claim 6 or 7,
   **characterized in that**
   a potential future position of the living being (2), which is in line with the determined parameter(s) or the chronological development of at least one of the determined parameters, is retrieved or determined from a database or a family of characteristics or an analytical model.

9. The method according to claim 6 or 7,

**characterized in that**
one or several of the parameters is/are provided to a model computer in order to determine a potential position of the living being (2), wherein said model computer is based on an abstract motion model for living beings (2).

**10.** The method according to any one of claims 5 to 9,
**characterized in that**
a path of movement, which depends on the current speed, the current orientation and the current rotation of the body, is taken into account for the determination of the potential future position.

**11.** The method according to any one of claims 5 to 10,
**characterized in that**
the maximum acceleration ability of the living being (2), which depends on his/her speed of movement, is taken into account for the determination of the potential future position.

**12.** The method according to any one of claims 4 to 11,
**characterized in that**
a minimum possible curve radius, which depends on the current walking speed and/or acceleration, is taken into account for the determination of the potential future position.

**13.** The method according to any one of claims 5 to 12,
**characterized in that**
a maximum deceleration ability, which depends on the speed of movement and/or a curve radius of the movement made by the living being (2), is taken into account for the determination of the potential future position.

**14.** The method according to any one of claims 5 to 13,
**characterized in that**
an angle at which the living being (2) is positioned or moves relative to a determined path of travel of the vehicle (1) is taken into account for the determination of the potential future position, wherein said angle is used to determine the amount of time it takes said living being (2) to turn towards the path of travel while accelerating substantially at the same time, thus entering the travel path region.

**15.** The method according to claim 14,
**characterized in that**
the angle taken into account is an angle ranging between 150° and 210°, thus taking into account a living being (2) whose back is positioned or moves towards the path of travel.

**16.** The method according to claim 14,
**characterized in that**
the angle taken into account is an angle ranging between 60° and 120°, thus taking into account a living being (2) whose side is positioned or moves towards the path of travel.

**17.** The method according to any one of claims 5 to 16,
**characterized in that**
a relative position of the living being (2) to a path of travel, in particular a distance at which the living being (2) is positioned or moves relative to said path of travel, is taken into account for the determination of the potential future position, wherein said relative position is used to determine the amount of time it takes the living being (2) to speed up, thus entering the travel path region.

**18.** The method according to any one of claims 5 to 17,
**characterized in that**
information relating to the surroundings and/or obstacles is taken into account for the determination of the potential future position.

**19.** The method according to claim 11,
**characterized in that**
depending on the speed of movement of the living being (2), a maximum acceleration ability in a direction opposite to the current direction of movement and/or orientation of the living (2) is predefined, in addition to a maximum acceleration ability in the current direction of movement.

**20.** The method according to claim 19,
**characterized in that**
at least one of the following parameters is predefined for the living being (2):

- a maximum speed from which the acceleration ability in the current direction of movement becomes zero,
- a maximum acceleration in the direction of orientation of a non-walking living being (2) as well as in a direction opposite to said orientation,
- a speed at which the maximum acceleration ability in the current direction of movement is highest,
- a speed at which the maximum acceleration ability in a direction opposite to the current direction of movement and/or orientation of the living being (2) is highest in value,
- a maximum speed in a direction opposite to the direction of orientation of the living being (2) from which the acceleration ability in a direction opposite to said direction of orientation becomes zero,

wherein said values are preferably predefined as a function of the class of the living being (2), in particular varying according to age, gender and body dimensions.

**21.** The method according to any one of the preceding claims, wherein a finite number of typical initial situations of motion (BSi(vi, ai, wi)) for different types of pedestrians (100) are measured and stored in a memory located aboard the vehicle (200) before said vehicle (200) is put into operation.

**22.** The method according to claim 21, wherein a group (TSi) of potential movement trajectories (Ti1, Ti2, ..., Ti10) are computed for each of said initial situations of motion (BSi(vi, ai, wi)), for a predefined period of time including increments ($\Delta t$).

**23.** The method according to claim 22, wherein the initial situations of motion (BSi(vi, ai, wi)) and the computed trajectory groups (TSi) are stored in the memory located aboard the vehicle.

**24.** The method according to claim 23, wherein the risk of a collision is computed as follows during operation of the vehicle:

- A suitable sensor system is used to detect the state of motion of the pedestrian (100).
- The most similar initial situation of motion (BSi(vi, ai, wi)) of the pedestrian (100), which was measured and stored in the memory before the vehicle (200) was put into operation, is selected.
- The trajectory group (TSi) that was computed for the selected initial situation of motion (BSi(vi, ai, wi)) before the vehicle (200) was put into operation and is stored with reference to said initial situation of motion (BSi(vi, ai, wi)) is retrieved and placed around the detected position of the pedestrian (100) in accordance with the orientation of said pedestrian (100).

**25.** The method according to claim 24, wherein the risk of a collision is computed as follows:

- The travel of the vehicle is extrapolated in small time increments, thus obtaining a driving path (210), which driving path (210) includes collision zones (221, 222, 223, 224) at respective time increments (t1, t2, t3, t4).
- At each time increment (t1, t2, t3, t4), only the position points (p10, ..., p19; p20, ..., p29; p30, ..., p39; p40, ..., p49) of the trajectories (Ti1, Ti2, ..., Ti10) of the selected trajectory group (TSi) are taken into account, wherein said position points (p10, ..., p19; p20, ..., p29; p30, ..., p39; p40, ..., p49) at the respective time increment (t1, t2, t3, t4) reflect the potential positions of the pedestrian (100) at said time increment (t1, t2, t3, t4).
- It will then be checked whether said selected position points (p10, ..., p19; p20, ..., p29; p30, ..., p39; p40, ..., p49) are located within the collision zone (221, 222, 223, 224) of the vehicle (200).
- The number of trajectories (Ti1, Ti2, Ti3, Ti10) within the trajectory group (TSi) including the position points (p10, p21, p29, p32) that are located within one of the collision zones (221, 222, 223, 224) of the vehicle (200) and predict a single collision between the vehicle (200) and the pedestrian (100) is determined.

**26.** The method according to claim 25, wherein those trajectories (Ti1, Ti2, Ti3, Ti10) including the position points (p10, p21, p29, p32) that are located within one of the collision zones (221, 222, 223, 224) of the vehicle (200) and predict a single collision between the vehicle (200) and the pedestrian (100) are disregarded in the subsequent computation steps for the next time increments (t2, t3, t4).

**27.** The method according to any one of claims 24 to 26, wherein the method steps in time increments ($\Delta t$) in order to determine the number of trajectories (Ti1, Ti2, Ti3, Ti10) including the position points (p10, p21, p29, p32) that are located within one of the collision zones (221, 222, 223, 224) of the vehicle (200) and predict a single collision between the vehicle (200) and the pedestrian (100) for the subsequent time increments (t2, t3, t4) as well.

28. The method according to any one of claims 24 to 27, wherein the method steps are carried out until the vehicle (200) has passed the pedestrian (100) to an extent that collisions between the vehicle (200) and the pedestrian (100) can no longer occur.

29. The method according to claim 28, wherein the total number of trajectories (Ti1, Ti2, Ti3, Ti10) including at least one position point (p10, p21, p29, p32) that is located within one of the collision zones (221, 222, 223, 224) of the vehicle (200) is determined, and the quotient (Q) of the total number of collision trajectories (Ti1, Ti2, Ti3, Ti10) and the total number of trajectories (Ti1, ..., Ti10) is computed.

30. A vehicle comprising a protection system for living beings (2) outside said vehicle (1), in particular pedestrian protection devices

- comprising at least one sensor system to obtain information relating to the surroundings,
- comprising a computing unit that analyzes said surroundings information in order to identify a living being, in particular a pedestrian (2), determines a movement trajectory for each of the living being (2) and the vehicle (1) as a trajectory pair, and uses said trajectory pair to deduce the probability of a collision and hence the necessity to activate a protection system, wherein
- the vehicle (1) is designed to carry out the method according to any one of the preceding claims, wherein
- said sensor system is designed to detect parameters of living beings (2) and of their physiological movement ability, and
- said computing unit is designed to determine the potential future position at a given moment in time, based on a location of the movement trajectory and on the state of motion and taking into account a physiological movement ability of the living being (2) for one or several future moment(s) in time.

## Revendications

1. Procédé pour déterminer une probabilité de collision d'un véhicule (1) avec un être vivant (2), dans lequel le comportement spatiotemporel de l'être vivant (2) est modélisé avec un modèle de comportement, et le comportement spatiotemporel du véhicule (1) est modélisé avec un modèle cinématique, et dans lequel respectivement au moins une trajectoire (4) est définie en commençant par les positions actuelles du véhicule (1) et de l'être vivant (2), **caractérisé en ce que**,

   b) en partant des positions actuelles de l'être vivant (2) et du véhicule (1), une trajectoire (3, 4) du véhicule (1) est calculée à partir du modèle cinématique et une trajectoire (4) de l'être vivant (2) est calculée à partir d'un modèle de comportement, les deux trajectoires en tant que paire de trajectoires, jusqu'à ce que le véhicule (1) ait dépassé suffisamment l'être vivant (2) pour qu'aucune collision ne puisse plus survenir,
   c) le nombre de paires de trajectoires qui indiquent une collision est déterminé, et
   d) la probabilité de collision est déterminée en tant que quotient à partir du nombre de paires de trajectoires qui indiquent une collision et du nombre total de paires de trajectoires calculées.

2. Procédé selon la revendication 1,
   **caractérisé en ce**
   **qu'**une collision est indiquée quand la distance entre le véhicule (1) et l'être vivant (2) qui est indiquée par les trajectoires (3, 4) d'une paire de trajectoires passe sous un seuil prédéfini.

3. Procédé selon la revendication 1 ou 2,
   **caractérisé en ce que**
   les étapes de procédé b) à d) sont répétées à des intervalles de temps ($T_1$, $T_2$, $T_3$, ...) incrémentiels.

4. Procédé selon une des revendications précédentes,
   **caractérisé en ce que**,
   au moyen du modèle de comportement, des lieux de séjour possibles de l'être vivant (2) sont définis pour un ou pour plusieurs instants en prenant en compte l'état de mouvement à l'instant du début du calcul d'une paire de trajectoires.

**5.** Procédé selon une des revendications précédentes,
**caractérisé en ce que**
le modèle de comportement prend en compte la capacité de mouvement physique et physiologique de l'être vivant (2) et/ou des échantillons de mouvement de l'être vivant (2) déterminés de façon empirique.

**6.** Procédé selon la revendication 4 et 5,
**caractérisé en ce que**,
en tant que paramètre pour la détermination de l'état de mouvement et/ou du lieu de séjour possible dans le futur, un ou plusieurs des paramètres suivants sont déterminés et traités :

- une vitesse de rotation de l'être vivant (2),
- une accélération de rotation autour d'un axe vertical de l'être vivant (2),
- un rayon de courbure existant du mouvement de l'être vivant (2),
- une modification d'une direction de mouvement ou d'un rayon de courbure du mouvement de l'être vivant (2),
- une inertie de masse de l'être vivant (2),
- un coefficient de friction avec le sol du substrat dépendant en particulier des conditions météorologiques,
- une classe de l'être vivant (2), en particulier un âge, une dimension corporelle prédéfinie (par ex. hauteur, longueur des jambes ou du pas), un genre ou une espèce (par ex. être humain/animal/enfant/cycliste),
- une capacité de mouvement par un ou plusieurs pas de côté,
- une capacité de mouvement par un ou plusieurs pas en arrière,
- capacité de mouvement par mouvement du centre de gravité,
- capacité de mouvement par inclinaison du corps.

**7.** Procédé selon la revendication 6,
**caractérisé en ce que**,
en tant que paramètre pour la détermination de l'état de mouvement et/ou du lieu de séjour possible dans le futur, un ou plusieurs des paramètres suivants sont déterminés et traités :

- une position de l'être vivant (2),
- une orientation de l'être vivant (2) par rapport à l'environnement,
- une vitesse de translation de l'être vivant (2),
- une accélération de translation de l'être vivant (2),
- l'allure chronologique d'au moins un des paramètres cités.

**8.** Procédé selon la revendication 6 ou 7,
**caractérisé en ce que**,
à partir d'une base de données ou d'un champ de courbes caractéristiques ou d'un modèle analytique, un lieu de séjour futur possible de l'être vivant (2) affecté au paramètre déterminé ou aux paramètres déterminés ou à l'allure chronologique d'au moins un des paramètres déterminés est lu ou déterminé.

**9.** Procédé selon la revendication 6 ou 7,
**caractérisé en ce**
**qu'**un ou plusieurs des paramètres sont conduits à un calculateur de modèle pour la détermination d'un lieu de séjour possible de l'être vivant (2), un modèle de mouvement extrait pour l'être vivant (2) servant de base au calculateur de modèle.

**10.** Procédé selon une des revendications 5 à 9,
**caractérisé en ce que**,
pour la détermination du lieu de séjour possible dans le futur, un tracé de mouvement est pris en compte en fonction de la vitesse actuelle, de l'orientation actuelle et de la rotation corporelle actuelle.

**11.** Procédé selon une des revendications 5 à 10,
**caractérisé en ce que**,
pour la détermination du lieu de séjour possible dans le futur, la capacité d'accélération maximale de l'être vivant (2) est prise en compte en fonction de sa vitesse de mouvement.

**12.** Procédé selon une des revendications 4 à 11,
**caractérisé en ce que**,

pour la détermination du lieu de séjour possible dans le futur, un rayon de virage pouvant être parcouru au minimum est pris en compte en fonction de la vitesse et/ou de l'accélération de déplacement existante.

13. Procédé selon une des revendications 5 à 12,
**caractérisé en ce que**,
pour la détermination du lieu de séjour possible dans le futur, une capacité de ralentissement maximale est prise en compte en fonction de la vitesse de mouvement et/ou d'un rayon de virage du mouvement de l'être vivant (2).

14. Procédé selon une des revendications 5 à 13,
**caractérisé en ce que**,
pour la détermination du lieu de séjour possible dans le futur, il est pris en compte un angle suivant lequel l'être vivant (2) se tient par rapport à un tracé de déplacement déterminé du véhicule (1), ou suivant lequel il se déplace par rapport à ce dernier, et, en fonction de l'angle, il est déterminé en combien de temps l'être vivant (2) peut se tourner en direction du tracé de déplacement ou peut accélérer de façon essentiellement simultanée pour arriver dans la zone du tracé de déplacement.

15. Procédé selon la revendication 14,
**caractérisé en ce que**,
en tant qu'angle, il est pris en compte un angle entre 150° et 210°, et donc un être vivant (2) se tenant ou se déplaçant en tournant le dos au tracé de déplacement.

16. Procédé selon la revendication 14,
**caractérisé en ce que**,
en tant qu'angle, il est pris en compte un angle entre 60° et 120°, et donc un être vivant (2) se tenant ou se déplaçant latéralement par rapport au tracé de déplacement.

17. Procédé selon une des revendications 5 à 16,
**caractérisé en ce que**,
pour la détermination du lieu de séjour possible dans le futur, il est pris en compte une position relative de l'être vivant (2) par rapport à un tracé de déplacement, en particulier une distance à laquelle l'être vivant (2) se tient par rapport au tracé de déplacement ou se déplace par rapport à celui-ci et, en fonction de la position relative, il est déterminé en combien de temps l'être vivant (2) peut accélérer pour arriver dans la zone du tracé de déplacement.

18. Procédé selon une des revendications 5 à 17,
**caractérisé en ce que**,
pour la détermination du lieu de séjour possible dans le futur, des informations sur l'environnement et/ou des obstacles sont pris en compte.

19. Procédé selon la revendication 11,
**caractérisé en ce que**,
en fonction de la vitesse de mouvement de l'être vivant (2), outre une capacité d'accélération maximale dans la direction de mouvement suivie jusqu'à présent, une capacité d'accélération maximale dans la direction opposée à la direction de mouvement suivie jusqu'à présent et/ou à l'orientation jusqu'à présent de l'être vivant (2) est également prédéfinie.

20. Procédé selon la revendication 19,
**caractérisé en ce que**,
pour l'être vivant (2), au moins un des paramètres suivants est prédéfini :

- une vitesse maximale à partir de laquelle la capacité d'accélération dans la direction de mouvement suivie jusqu'à présent devient nulle,
- une accélération maximale aussi bien suivant l'orientation qu'à l'inverse de l'orientation d'un être vivant (2) présent,
- une vitesse à laquelle la capacité d'accélération maximale dans la direction de mouvement suivie jusqu'à présent est maximale,
- une vitesse à laquelle la capacité d'accélération maximale dans la direction opposée à la direction de mouvement suivie jusqu'à présent et/ou à l'orientation jusqu'à présent de l'être vivant (2) présente une valeur maximale,

- une vitesse maximale opposée à l'orientation de l'être vivant (2) et à partir de laquelle la capacité d'accélération opposée à l'orientation devient nulle,

ces valeurs étant prédéfinies de façon variable de préférence en fonction de la classe de l'être vivant (2), en particulier de son âge, de son genre et de ses dimensions corporelles.

21. Procédé selon une des revendications précédentes,
un nombre fini de situations initiales de mouvement (BSi (vi, ai, wi)) typiques pour différents types de piétons (100) étant mesuré avant que le véhicule (200) soit mis en marche et étant enregistré dans une mémoire embarquée dans le véhicule (200).

22. Procédé selon la revendication 21,
une multitude (TSi) de trajectoires de mouvement (Ti1, Ti2, ..., Ti10) possibles étant calculées pour chacune de ces situations initiales de mouvement (BSi (vi, ai, wi)) pour une certaine période de temps prédéfinie avec des étapes incrémentielles ($\Delta$t).

23. Procédé selon la revendication 22,
les situations initiales de mouvement (BSi (vi, ai, wi)) étant archivées dans la mémoire embarquée dans le véhicule avec les multitudes de trajectoires calculées (TSi).

24. Procédé selon la revendication 23,
le calcul des risques de collision pendant la marche du véhicule étant effectué comme suit :

   - L'état de mouvement du piéton (100) est détecté par un système de capteurs approprié.
   - On sélectionne la situation initiale de mouvement (BSi (vi, ai, wi)) du piéton (100) la plus proche qui est mesurée avant la mise en marche du véhicule (200) et qui est archivée dans la mémoire.
   - La multitude de trajectoires (TSi) qui sont calculées avant la mise en marche du véhicule (200) pour cette situation initiale de mouvement (BSi (vi, ai, wi)) et qui sont enregistrées de façon affectée à cette situation initiale de mouvement (BSi (vi, ai, wi)) sont lues, et elles sont placées de façon correspondante à l'orientation du piéton (100) et autour de la position détectée du piéton (100).

25. Procédé selon la revendication 24
le risque de collision se calculant comme suit :

   - Le mouvement du véhicule est extrapolé en petits intervalles de temps et un boyau de route (210) est formé, ce boyau de route (210) présentant la zone de collision (221, 222, 223, 224) aux intervalles de temps (t1, t2, t3, t4) respectifs.
   - A chaque intervalle de temps (t1, t2, t3, t4), seuls les points de séjour (p10, ..., p19 ; p20, ... , p29 ; p30, ..., p39 ; p40, ... , p49) des trajectoires (Ti1, Ti2, ... , Ti10) de la multitude de trajectoires (TSi) sélectionnée sont considérés, les points de séjour (p10, ..., p19 ; p20, ..., p29 ; p30, ..., p39 ; p40, ..., p49) à l'intervalle de temps (t1, t2, t3, t4) respectif reproduisant les positions de séjour possibles du piéton (100) à cet intervalle de temps (t1, t2, t3, t4).
   - Ensuite, il est vérifié si ces points de séjour (p10, ..., p19 ; p20, ..., p29 ; p30, ..., p39 ; p40, ... , p49) sélectionnés se trouvent dans la zone de collision (221, 222, 223, 224) du véhicule (200).
   - Le nombre de trajectoires (Ti1, Ti2, Ti3, Ti10) dans la multitude de trajectoires (TSi) avec les points de séjour (p10, p21, p29, p32) qui se trouvent dans une des zones de collision (221, 222, 223, 224) du véhicule (200) et qui prédisent une collision individuelle entre le véhicule (200) et le piéton (100) sont déterminées.

26. Procédé selon la revendication 25,
les trajectoires (Ti1, Ti2, Ti3, Ti10) avec les points de séjour (p10, p21, p29, p32) qui sont situés dans une des zones de collision (221, 222, 223, 224) du véhicule (200) et qui prédisent une collision individuelle entre le véhicule (200) et le piéton (100) étant extraites pour les étapes de calcul suivantes dans les intervalles qui suivent (t2, t3, t4).

27. Procédé selon une des revendications 24 à 26,
les étapes de procédé .... dans des intervalles de temps ($\Delta$t) incrémentiels pour fixer, également pour les intervalles de temps suivants (t2, t3, t4), le nombre de trajectoires (Ti1, Ti2, Ti3, Ti10) avec les points de séjour (p10, p21, p29, p32) qui sont situés dans une des zones de collision (221, 222, 223, 224) du véhicule (200) et qui prédisent une collision individuelle entre le véhicule (200) et le piéton (100).

**28.** Procédé selon une des revendications 24 à 27,
les étapes de procédé étant réalisées jusqu'à ce que le véhicule (200) ait dépassé le piéton (100) suffisamment pour qu'aucune collision ne puisse plus survenir entre le véhicule (200) et le piéton (100).

**29.** Procédé selon la revendication 28,
le nombre total de trajectoires (Ti1, Ti2, Ti3, Ti10) avec au moins un point de séjour (p10, p21, p29, p32) qui se trouve dans une des zones de collision (221, 222, 223, 224) du véhicule (200) étant déterminé, et le quotient (Q) entre le nombre total de trajectoires de collision (Ti1, Ti2, Ti3, Ti10) et le nombre total de trajectoires (Ti1, ..., Ti10) étant formé.

**30.** Véhicule avec un système de protection pour des êtres vivants (2) en dehors du véhicule (1), en particulier des équipements de protection de piétons

- avec au moins une technologie de capteurs destinée à détecter des informations sur l'environnement,
- avec une unité de calcul qui analyse les informations sur l'environnement afin d'identifier un être vivant, en particulier un piéton (2), et qui établit respectivement, pour l'être vivant (2) et le véhicule (1), une trajectoire de mouvement en tant que paire de trajectoires et en déduit une probabilité de collision et donc la nécessité de déclencher un système de protection,
- le véhicule (1) étant constitué pour la réalisation du procédé selon une des revendications précédentes,
- la technologie de capteurs étant constituée pour la détection de paramètres d'êtres vivants (2) et de leur capacités physiologiques de mouvement, et
- l'unité de calcul étant constituée pour la détermination du lieu de séjour possible dans le futur à l'instant donné en partant d'un endroit de la trajectoire de mouvement et de l'état de mouvement avec prise en compte d'une capacité physiologique de mouvement de l'être vivant (2) pour un plusieurs instants futurs.

$T_0 + \Delta t +$

$\ldots t + \Delta t + \ldots$

$T_0$

$\ldots$

1    3    1

5

4

2    $T_0$

**Fig. 1**

Beschleunigung in bisherige Bewegungsrichtung/Ausrichtung

Q4   $a_{max+}$

$0 \ m/s^2$

Q1

$V_{max-}$

Geschwindigkeit

$V_{max+}$

v

+

−

Q3

Q2

$a_{max-}$

Beschleunigung entgegen bisherige Bewegungsrichtung

**Fig. 2**

Fig. 3

Fig. 4

Fig. 5

Fig. 6

EP 2 382 609 B1

```
                              ┌──────────────────┐
                              │   IST-Position   │
                        S1────│    Fussgänger    │
                              └──────────────────┘
                                       │
                                       ▼                    ┌──────────────────────┐
                                      ⊗ ◄────────────────── │    Störung der        │──ST
                                       │                    │ Positionsinformation  │
                                       ▼                    └──────────────────────┘
                              ┌──────────────────┐
                              │ Erfasste-Position│
                        S2────│    Fussgänger    │
                              └──────────────────┘
                                       │
                                    ╱──────────╲
                              S3───╱ Chronologie ╲
                                   ╲ Laufbewegung ╱
                                    ╲──────────╱
                 ┌─────────────────────┴──────────────────────┐
                 │                                    S6       │
   ┌─────────────────────────────┐          ┌─────────────────────────────┐
   │  Aktueller Bewegungszustand  │          │  Aktueller Bewegungsverlauf  │
S5─│         Fussgänger           │          │          Fussgänger          │
   └─────────────────────────────┘          └─────────────────────────────┘
                 │                    S7          │
                 ▼                    │           ▼
   ┌─────────────────────────────┐ ┌─────────────────────────────┐ ┌──────────────────────────┐
   │      Physikalischer          │ │    Einschränkungen           │ │  Typische Bewegungs-      │
S6─│    Bewegungsspielraum        │ │ durch Umgebungsbedingungen   │ │    ablaufmuster           │──S8
   └─────────────────────────────┘ └─────────────────────────────┘ └──────────────────────────┘
                 │                           │                              │
                 ▼                          AE                              ▼
   ┌─────────────────────────────┐          │               ┌──────────────────────────┐
   │  Wahrscheinlichkeitsverteilung│         │               │      Erwartete            │
S7─│    Bewegungsspielraum        │          │               │ Vorzugsbewegungsrichtung  │──S9
   └─────────────────────────────┘          │               └──────────────────────────┘
                 └──────────────────────────▽──────────────────────────────┘
                                      ┌──────────────────┐
                                      │ Bewegungshorizont│
                               S10────│    Fussgänger    │
                                      └──────────────────┘
```

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10325762 A1
- EP 1331621 B1